# EUROPEAN PATENT SPECIFICATION

(11) **EP 4 540 331 B1**
(45) Date of publication and mention of the grant of the patent: **22.10.2025**
(21) Application number: 22758418.2
(22) Date of filing: 11.07.2022
(51) Int. Cl.: C09D 183/04, C09D 133/00

(54) **METHOD OF APPLYING A SEALANT COMPOSITION**
VERFAHREN ZUM AUFTRAGEN EINER DICHTUNGSMITTELZUSAMMENSETZUNG
PROCÉDÉ D'APPLICATION D'UNE COMPOSITION D'ÉTANCHÉITÉ

(43) Date of publication of application: 23.04.2025
(73) Proprietor: Dow Silicones Corporation, Midland MI 48886-0994 (US)
(72) Inventor: WANG, Xiuyan, Shanghai 201203 (CN); GUO, Yi, Shanghai 201203 (CN); HU, Qiang, Shanghai 201203 (CN); PENG, Jiang, Shanghai 201203 (CN); ZENG, Zhiping, Shanghai 201203 (CN)
(74) Representative: Elkington and Fife LLP
(86) International application number: PCT/CN2022/104887
(87) International publication number: WO 2024/011348

(56) References cited:
- EP-A2- 0 690 100

## Description

This relates to a method of applying a one-part room temperature vulcanisable (RTV) silicone composition, comprising organopolysiloxane polymers having at least two groups per molecule selected from alkoxy groups, hydroxyl groups or a combination thereof and titanate-based or zirconate-based catalysts, onto a hot porous substrate at a temperature of at least 40°C, by first applying a waterborne or solvent borne binder composition on the hot porous substrate at a temperature of at least 40°C to generate a continuous resilient binder film prior to application of the one-part room temperature vulcanisable (RTV) silicone composition. There is also provided a hot porous substrate, at a temperature of at least 40°C, coated with a cured layer of a one-part room temperature vulcanisable (RTV) silicone composition. The porous substrate may for example be a construction material such as stone, marble, brick, concrete, cement and other cementitious substrates.

Room temperature vulcanizable (RTV) silicone rubber compositions (hereinafter referred to as "RTV compositions") are well known. Generally, such compositions comprise an -OH end-blocked diorganopolysiloxane polymer or an alkoxy end-blocked polydiorganosiloxane which may have an alkylene link between the terminal silicon and penultimate silicon in the polymer chain. They are usually condensation curable and therefore also contain one or more suitable cross-linking agents designed to react with the -OH and/or alkoxy groups and thereby cross-link the composition usually, but not absolutely always, in combination with one or more condensation cure catalysts to form an e.g., elastomeric sealant product. One or more additional ingredients such as reinforcing fillers, non-reinforcing fillers, adhesion promotors, diluents (e.g., plasticisers and/or extenders), chain extenders, flame retardants, solvent resistant additives, biocides and the like are often also incorporated into these compositions as and when required. They may be one-part compositions or multiple-part, e.g., two-part compositions.

One-part condensation curing silicone compositions are utilised to generate skin or diffusion cured silicone elastomers used as caulks, sealants, encapsulants and/or adhesives. They are generally designed not to contain any water/moisture in the composition so far as possible, i.e., they are stored in a substantially anhydrous form to prevent premature cure during storage before use. Such one-part condensation curing silicone compositions are applied onto substrates in a layer that is typically thinner than 15 mm. If such compositions are applied in layers thicker than 15 mm it can often lead to uncured material in the depth of the material, because the moisture is very slow to diffuse in very deep sections. Skin or diffusion cure (e.g., moisture/condensation) takes place by the formation of a cured skin at the composition/air interface subsequent to the sealant/encapsulant being applied on to a substrate surface. Subsequent to the generation of the surface skin the cure speed is dependent on the speed of diffusion of moisture from the sealant/encapsulant interface with air to the inside (or core) of the layer of the silicone composition applied, and the diffusion of condensation reaction byproduct/effluent from the inside (or core) to the outside (or surface) of the material and the gradual thickening of the cured skin over time from the outside/surface to the inside/core. The main, if not sole source, of moisture in these compositions are the inorganic fillers, e.g., silica when present. Said fillers may be rendered anhydrous before inter-mixing with other ingredients or water/moisture may be extracted from the mixture during the mixing process to ensure that the resulting sealant composition is substantially anhydrous.

Silicone sealant compositions having at least one Si-alkoxy bond, e.g., Si-methoxy bond in the terminal reactive silyl group and having a polydiorganosiloxane polymeric backbone are widely used for sealants in the construction industry because they have good adhesion, and weather resistance and cure at room temperature. The construction industry prefers one-component compositions to negate the need for mixing ingredients before application and compositions with excellent workability.

Typically, a one-part room temperature vulcanisable (RTV) silicone composition comprising organopolysiloxane polymers having at least two groups per molecule selected from alkoxy groups, hydroxyl groups or a combination thereof and titanate-based or zirconate-based catalysts is highly desirable for applications involving porous construction materials because such sealants have little or no deleterious effects on the porous substrates against which they are cured.

When a one-part room temperature vulcanisable (RTV) silicone composition comprising organopolysiloxane polymers having at least two groups per molecule selected from alkoxy groups, hydroxyl groups or a combination thereof and titanate-based or zirconate-based catalysts is applied on porous substrate surfaces, for example, construction materials such as stone, marble, brick, concrete, cement and other cementitious substrates, at room temperature minimal or no bubbling occurs in the sealant at the sealant/substrate interface. Advantageously, there is good adhesion between the substrate and the resulting cured sealant and as such the surface of the relevant porous substrate does not require to be pre-coated with a thin layer (typically no more than 12.5µm thick) of a primer before application.

However, a major issue for construction operatives in hot countries is that there is a gradual increase in bubbling within the curing layer of the one-part room temperature vulcanisable (RTV) silicone composition at the sealant/substrate interface as the environmental temperature and in particular the temperature of the substrate increases in hot climates and this becomes particularly pronounced when substrate surfaces reach 40°C or greater which can regularly happen when the substrates are in direct sunlight for several hours in the working day. The generation of bubbles in a one-part room temperature vulcanisable (RTV) silicone composition comprising organopolysiloxane polymers having at least two groups per molecule selected from alkoxy groups, hydroxyl groups or a combination thereof and titanate-based or zirconate-based catalysts, when the temperature of the substrate is above 40°C is often significant resulting in surface blistering and poor adhesion. Without being bound to current theories it is believed that when these one-part room temperature vulcanisable (RTV) silicone composition are applied onto porous substrates, especially construction materials such as stone, marble, brick, concrete, cement and other cementitious substrates which are generally hydrophilic, at elevated temperatures (e.g., over 40°C), as the substrate temperature increases more and more moisture/water vapor will condense or enrich at the interface of the one-part room temperature vulcanisable (RTV) silicone composition and porous substrate driven by capillary action and reactivity of moisture with the composition. This is believed to cause more and more hydrolyzation of alkoxy silyl groups at the interface and consequently causes an accelerated generation of alcohols especially methanol at the substrate/composition interface. Typically, the alcohols generated, especially methanol have low boiling points at atmospheric pressure and because at elevated temperatures methanol generation accelerates at the interface, its speed of generation increasingly exceeds its permeation speed through bulk composition causing bubbling within the curing and eventually cured composition. The bubbles generated are unacceptable as they will not only cause surface blistering but also very poor adhesion. Weather sealing substrates and other construction processes involving the use of one-part room temperature vulcanisable (RTV) silicone composition such as sealing joints between substrates and/or around windows, window frames and frames and facades and the like need to be completed during the working day as and when the job requires it and waiting for cooler overnight temperatures is not an option in order to work efficiently so this can be a major issue for the construction industry particularly for countries with hot climates. EP0690100 describes a method of reducing bubble formation when curing a room temperature vulcanizable silicone sealant composition on a hot porous substrate. Binders or film formers (hereafter referred to as binders) are film forming components of coatings such as paints, which are typically mixed with solvents and a variety of additives to produce a required coating composition. In use, the coating composition is applied onto a substrate and is allowed to dry or cure whilst the solvent evaporates with the binder drying and/or coalescing into a cohesive filmic coating on the substrate surface.

There is provided herein a method of applying a one-part room temperature vulcanisable (RTV) silicone composition comprising organopolysiloxane polymers having at least two groups per molecule selected from alkoxy groups, hydroxyl groups or a combination thereof and titanate-based or zirconate-based catalysts onto a hot porous substrate at a temperature of at least 40°C comprising the steps of
(i) Applying a waterborne or solvent borne binder composition comprising at least 20 wt. % of said binder selected from (meth)acrylic resin, poly(meth)acrylic acid, polyvinyl acetate, polyvinylpyrrolidone, polyvinyl butyral, polyurethane and a silicone resin of the structure

   M₍ₐ₎D_{(b)}T_{(c)}Q_{(d)}

   Where 0<a<1, b≥0, c ≥ 0, d ≥ 0, c + d is >0, a + b + c + d= 1, and a + d ≠ 1 when a, b, c and d are mole fractions; or a mixture of two or more thereof; onto the surface of a hot porous substrate at a temperature of at least 40°C;
(ii) allowing the waterborne or solvent borne binder composition to dry and/or cure enabling the binder to coalesce and form a continuous resilient binder film on the hot porous substrate, and then
(iii) applying and curing a one-part room temperature vulcanisable (RTV) silicone composition comprising organopolysiloxane polymers having at least two groups per molecule selected from alkoxy groups, hydroxyl groups or a combination thereof and titanate-based or zirconate-based catalysts on the surface of the continuous resilient binder film.

The porous substrates may for example be construction materials such as stone, marble, brick, concrete, cement and other cementitious substrates.

There is also provided a sealed porous substrate which is the product of the above process.

There is also provided herein a hot porous substrate at a temperature of at least 40°C coated with a cured layer of a one-part room temperature vulcanisable (RTV) silicone composition obtained or obtainable by
(i) Applying either
   a waterborne or solvent borne binder composition comprising at least 20 wt. % of said binder selected from (meth)acrylic resin, poly(meth)acrylic acid, polyvinyl acetate, polyvinylpyrrolidone, polyvinyl butyral, polyurethane and a silicone resin of the structure

      M₍ₐ₎D_{(b)}T_{(c)}Q₍ₐ₎

      Where 0<a<1, b≥0, c ≥ 0, d ≥ 0, c + d is >0, a + b + c + d= 1, and a + d ≠ 1 when a, b, c and d are mole fractions or a mixture of two or more thereof;
   onto the surface of a hot porous substrate at a temperature of at least 40°C;
(ii) allowing the waterborne or solvent borne binder composition to dry and/or cure enabling the binder to coalesce and form a continuous resilient binder film on the hot porous substrate, and then
(iii) applying and curing a one-part room temperature vulcanisable (RTV) silicone composition comprising organopolysiloxane polymers having at least two groups per molecule selected from alkoxy groups, hydroxyl groups or a combination thereof and titanate-based or zirconate-based catalysts on the surface of the continuous resilient binder film.

There is also provided a use of
a waterborne or solvent borne binder composition comprising at least 20 wt. % of said binder selected from (meth)acrylic resin, poly(meth)acrylic acid, polyvinyl acetate, polyvinylpyrrolidone, polyvinyl butyral, polyurethane and a silicone resin of the structure

   M₍ₐ₎D_{(b)}T_{(c)}Q₍ₐ₎
Where 0<a<1, b≥0, c ≥ 0, d ≥ 0, c + d is >0, a + b + c + d= 1, and a + d ≠ 1 when a, b, c and d are mole fractions or a mixture of two or more thereof;
in a method for applying a one-part room temperature vulcanisable (RTV) silicone composition comprising organopolysiloxane polymers having at least two groups per molecule selected from alkoxy groups, hydroxyl groups or a combination thereof and titanate-based or zirconate-based catalysts on to a hot porous substrate at a temperature of at least 40°C comprising the steps of applying waterborne or solvent borne binder composition comprising at least 20 wt. % of said binder onto the surface of a hot porous substrate at a temperature of at least 40°C;
allowing the waterborne or solvent borne binder composition comprising at least 20 wt. % of said binder to dry and/or cure enabling the binder to coalesce and form a continuous resilient binder film on the hot porous substrate; and then
applying and curing a one-part room temperature vulcanisable (RTV) silicone composition comprising organopolysiloxane polymers having at least two groups per molecule selected from alkoxy groups, hydroxyl groups or a combination thereof and titanate-based or zirconate-based catalysts on the surface of the continuous resilient binder film.

There is also provided a method for filling a space between a first substrate and a second substrate, at least one of which is a hot porous substrate at a temperature of at least 40°C, so as to create a seal therebetween, which seal has a cured layer of a one-part room temperature vulcanisable (RTV) silicone composition comprising:
(i) Applying
   a waterborne or solvent borne binder composition comprising at least 20 wt. % of said binder selected from (meth)acrylic resin, poly(meth)acrylic acid, polyvinyl acetate, polyvinylpyrrolidone, polyvinyl butyral, polyurethane, silicone resin of the structure

      M₍ₐ₎D_{(b)}T_{(c)}Q_{(d)}
   Where 0<a<1, b≥0, c ≥ 0, d ≥ 0, c + d is >0, a + b + c + d= 1, and a + d ≠ 1 when a, b, c and d are mole fractions or a mixture of two or more thereof;
   at least partially onto the surface of the hot porous substrate at a temperature of at least 40°C;
(ii) allowing the waterborne or solvent borne binder composition to dry and/or cure enabling the binder to coalesce and form a continuous resilient binder film on at least the hot porous substrate; and then
(iii) applying and curing a one-part room temperature vulcanisable (RTV) silicone composition comprising organopolysiloxane polymers having at least two groups per molecule selected from alkoxy groups, hydroxyl groups or a combination thereof and titanate-based or zirconate-based catalysts on the surface of the continuous resilient binder film.

The concept of "comprising" where used herein is used in its widest sense to mean and to encompass the notions of "include" and "consist of".

For the purpose of this application "substituted" means one or more hydrogen atoms in a hydrocarbon group has been replaced with another substituent. Examples of such substituents include, but are not limited to, halogen atoms such as chlorine, fluorine, bromine, and iodine; halogen atom containing groups such as chloromethyl, perfluorobutyl, trifluoroethyl, and nonafluorohexyl; oxygen atoms; oxygen atom containing groups such as (meth)acrylic and carboxyl; nitrogen atoms; nitrogen atom containing groups such as amino-functional groups, amido-functional groups, and cyano-functional groups; sulphur atoms; and sulphur atom containing groups such as mercapto groups.

The method described herein comprises bringing the waterborne or solvent borne binder composition into contact with a hot surface of a porous substrate, at a temperature of at least 40°C. and then allowing the waterborne or solvent borne binder composition to dry and/or cure on the substrate surface to form a continuous resilient binder film before applying a one-part room temperature vulcanisable (RTV) silicone composition onto the continuous resilient binder film on the substrate and then exposing the substrate and sealant composition combination to atmospheric moisture thereby obtaining a silicone sealant or the like bonded to a hot porous substrate.

It was found that this method results in a cured product of a one-part room temperature vulcanisable (RTV) silicone composition bonded to a hot porous substrate at a temperature of at least 40°C which cured product contains a reduced number of bubbles compared to an equivalent cured product when applied directly onto the hot substrate surface. In addition to the reduction in the number of bubbles formed, the bubbles which do form, are smaller in diameter.

Hence, we have surprisingly found that the provision of a continuous resilient binder film on the hot porous substrate prior to application of ane-part room temperature vulcanisable (RTV) silicone composition effectively prevents the capillary action in the substrates, and consequently the production of alcohols at the substrate/ one-part room temperature vulcanisable (RTV) silicone composition interface.

It is important for the resulting continuous resilient binder film produced upon application of the waterborne or solvent borne binder composition on to substrates at a temperature of at least 40°C to be continuous and resilient, i.e., not brittle. The thickness of the film is or is preferably a minimum of 20 µm. This can be determined e.g., in a laboratory setting by checking the substrate thickness prior to application of waterborne or solvent borne binder composition and then subsequently checking the thickness of the substrate with the continuous resilient coating film applied and determining the difference. Typically, the thickness of the continuous resilient binder film is in the range of from 30 to 300 µm, alternatively from 50 to 200 µm.

This enables the resulting continuous resilient binder films to physically separate the one-part room temperature vulcanisable (RTV) silicone composition from the hot porous substrate during the curing process on the hot porous substrate at a temperature of at least 40°C.

The binder in the waterborne or solvent borne binder composition comprising at least 20 wt. % of said binder may be any suitable binder selected from (meth)acrylic resin, poly(meth)acrylic acid, polyvinyl acetate, polyvinylpyrrolidone, polyvinyl butyral, polyurethane and silicone resin of the structure

M₍ₐ₎D_{(b)}T_{(c)}Q_{(d)}

Where 0<a<1, b≥0, c ≥ 0, d ≥ 0, c + d is >0, a + b + c + d= 1, and a + d ≠ 1 when a, b, c and d are mole fractions may be utilised.

The binders used e.g., for the sake of example (meth)acrylic resins, may be of any suitable weight average molecular weight, for example a weight average molecular weight in the range of from 10,000 to 5,000,000 g/mole, for example from 20,000 to 1,000,000 g/mole, alternatively from 30,000 to 750,000 g/mole, alternatively from 50,000 to 750,000 g/mole, alternatively from 75,000 to 750,000 g/mole. As used herein, unless otherwise indicated, the phrase "molecular weight" refers to the weight average molecular weight as measured by gel permeation chromatography (GPC) against polystyrene (PS) standards.

(Meth)acrylic-based resins are formed through the polymerization of the esters of acrylic or methacrylic acids along with various specialty (meth)acrylate monomers. The use of the term (meth)acrylate herein is intended to mean both acrylates and methacrylates.

When the binder in the waterborne or solvent borne binder composition comprising at least 20 wt. % of said binder is a (meth)acrylic resin, the (meth)acrylic resin may comprise or consist of particles and/or microparticles of (meth)acrylic polymer resins. Such (meth)acrylic resin particles would have particle size diameter in the range of from 75 to 450 nm, alternatively from 100 to 375nm, alternatively from 115 to 375nm or alternatively from 150 to 300nm. As used herein, unless otherwise indicated, the term "average particle size," with regard to the (meth)acrylic resin means the particle size as determined by light scattering (LS) using a BI-90 particle size analyzer, Brookhaven Instruments Corp. (Holtsville, N.Y.).

The (meth)acrylic resin may be of any suitable weight average molecular weight, for example a weight average molecular weight in the range of from 30,000 to 1,000,000 g/mole, for example from 50,000 to 750,000 g/mole, alternatively from 100,000 to 750,000 g/mole). As used herein, unless otherwise indicated, the phrase "molecular weight" (for (meth)acrylic resin) refers to the weight average molecular weight as measured by gel permeation chromatography (GPC) against polystyrene (PS) standards.

The (meth)acrylic resin may have any suitable glass transition temperature (*T*g) for example it may have a *T*g in the range of from -50 to 100° C. The meth)acrylic resin may have a pH in the range of from 7 to 10. As used herein, unless otherwise indicated, the term "*T*g" or "glass transition temperature" of a polymer, with regard to the (meth)acrylic emulsion and components thereof, refers to the *T*g of a polymer calculated by using the Fox equation (T. G. Fox, Bull. Am. Physics Soc., Volume 1, Issue No. 3, page 123 (1956).

Representative, non-limiting examples of commercially produced (meth)acrylic polymer waterborne dispersions useful for the binder of the present disclosure include those sold under the tradenames PRIMAL^{™} SS-640, PRIMAL^{™} AC-339, PRIMAL^{™} E-822K, UCAR^{™} Latex DL 420 G, PRIMAL^{™} AC-337 ER, PRIMAL^{™} CM-330, PRIMAL^{™} AC -285 and PRIMAL^{™} CM-160, RHOPLEX^{™} SG-10, RHOPLEX^{™} EI-2000, RHOPLEX^{™} 78 C and RHOPLEX^{™} EC-1741 (all available from DOW, Inc.) as well as PLEXIGLAS^{™} 6N, PLEXIGLAS^{™} 7N and PLEXIGLAS^{™} 8N from Röhm GmbH of Darmstadt Germany.

For the avoidance doubt a silicone resin according to the present disclosure may be depicted using the following general formula using shorthand (abbreviated) nomenclature:-

M₍ₐ₎D_{(b)}T_{(c)}Q_{(d)}

Where 0<a<1, b≥0, c ≥ 0, d ≥ 0, c + d is >0, a + b + c + d= 1, and a + d ≠ 1 (i.e. a + d cannot be 1) when a, b, c and d are mole fractions and M = (R¹R²R3SiO_{1/2}) D = (R⁴R^{5'}SiO_{2/2}), T = (R⁶SiO_{3/2}) and Q = (SiO_{4/2}) with the resin having a weight-average molecular weight between about 1,000 and about 100,000, on a standard polystyrene basis by gel permeation chromatography.

Each R¹-R⁴, R^{5'} and R^{6'} is independently selected from a monovalent hydrocarbon group, a carbinol group, an alkoxy group (preferably methoxy or ethoxy) or an amino group. Suitable exemplary monovalent hydrocarbon groups include, but are not limited to, alkyl groups such as methyl, ethyl, propyl, pentyl, octyl, undecyl, and octadecyl; alkenyl groups, cycloalkyl groups such as cyclopentyl and cyclohexyl; and aryl groups such as phenyl, tolyl, xylyl, benzyl, and 2-phenylethyl, and any combination thereof.

Suitable alkenyl groups contain from 2 carbon atoms to about 6 carbon atoms and may be exemplified by, but not limited to, vinyl, allyl, and hexenyl. The silicone resin may be a DT resin, an MT resin, an MDT resin, a DTQ resin, an MTQ resin, an MDTQ resin, a DQ resin, a DTQ resin, an MTQ resin, or an MDQ resin, of which DT resins which mainly contain D units (R⁴R⁵SiO_{2/2}) and T units (R⁶SiO_{3/2}). are particularly preferred. MQ resins (where a + d = 1) were not utilised as they were too powdery and were not able to provide a continuous resilient film.

Solutions of the waterborne or solvent borne binder composition may consist solely of binder and solvent, providing the binder/solvent combination was sufficiently viscous to be applied and cured/dried in thick enough layers.

When a waterborne or solvent borne binder composition is waterborne the solvent used is water or substantially i.e., at least 95% water and e.g., a small amount of e.g., an alcohol.

When the waterborne or solvent borne binder composition is a solvent borne binder composition, the binder chosen for use is dissolved in a suitable organic solvent for that specific binder.

Dependent on the binder being utilised the organic solvent may be selected from one or more of the following:-
linear or branched alkanes having from 6 to 16 carbons e.g. hexane, heptane and octane; isoalkanes having from 6 to 16 carbons e.g. isodecane, isododecane and isohexadecane; aromatic hydrocarbons, such as naphtha, benzene, toluene, and xylene; alcohols such as methanol, ethanol, isopropanol, butanol, and n-propanol; aldehydes; ketones such as methylisobutyl ketone, acetone, methylethyl ketone; amines; esters such as tert butyl acetate, methyl acetate, ethyl acetate, n-butyl acetate, methyl formate, isodecyl neopentanoate, isohexyl neopentanoate, ethyl-3 ethoxypropionate, tridecyl neopentanoate, octyldodecyl neopentanoate, diisobutyl adipate, diisopropyl adipate and octyl palmitate; ethers such as octyl ether; glycols such as propylene glycol; glycol ethers such as glycol n-butyl ether, propylene glycol n-butyl ether, propylene glycol dicaprylate/dicaprate, propylene glycol methyl ether, dipropylene glycol methyl ether, propylene glycol n-butyl ether, propylene glycol n-propyl ether, ethylene glycol n-butyl ether and propylene glycol methylether (PGME); glycol esters such as neopentylglycol heptanoate, glycol distearate, propylene glycol methyl ether acetate and propylene glycol methylether acetate (PGMEA); a halogenated hydrocarbon, such as dichloromethane, 1,1,1-trichloroethane and methylene chloride; chloroform; aromatic halides, and other solvents such as dimethyl sulfoxide; dimethyl formamide, acetonitrile; tetrahydrofuran; white spirits; mineral spirits; n-methylpyrrolidone; and the like, as well as derivatives, modifications, and combination thereof.

The binder may be applied onto the hot substrate surface as a waterborne composition comprising water and at least 20 wt. % of said binder in the composition, alternatively from 20 to 75 wt. % of said binder is in the composition alternatively from 25 to 70 wt. % of said binder is in the composition.

Alternatively, the binder may be applied in a solvent borne composition comprising a non-aqueous solvent and at least 20 wt. % of said binder in the composition, alternatively from 20 to 75 wt. % of said binder is in the composition alternatively from 25 to 70 wt. % of said binder is in the composition.

Optionally one or more additives may be present in the waterborne or solvent borne binder composition binder. These may include, for example, one or more silanes with at least two hydrolyzable groups per molecule, alternatively silane coupling agents (like aminosilane, epoxysilane, thiol silane etc.) and catalysts for example titanates, zirconates and/or aluminum organometallic compounds, and any combination thereof.

In the case of silanes there may be provided one or more silanes with at least two or three hydrolyzable groups per molecule. Any suitable hydrolysable groups may be utilised such as alkoxy groups, acetoxy groups and oximo groups, although alkoxy groups are preferred. The alkoxy groups may be the same or different and typically have from one to 10 carbons, alternatively 1 to 6 carbons, are alternatively methoxy or ethoxy groups. When the silane has two or three hydrolysable groups, e.g., two or three alkoxy groups, each other group is suitably non-hydrolysable silicon-bonded organic group which is typically a hydrocarbyl group which may be substituted by halogen such as fluorine and chlorine. Examples of such other groups include alkyl groups (for example methyl, ethyl, propyl, and butyl); cycloalkyl groups (for example cyclopentyl and cyclohexyl); alkenyl groups (for example vinyl and allyl); aryl groups (for example phenyl, and tolyl); aralkyl groups (for example 2-phenylethyl) and groups obtained by replacing all or part of the hydrogen in the preceding organic groups with halogen. Preferably however, each other silicon-bonded organic group is preferably an alkyl group having 1 to 6 carbons such as methyl or ethyl groups or an alkenyl group having from 2 to 6 carbons such as a vinyl group.

Specific examples of silanes which may be incorporated as additives in said waterborne or solvent borne binder composition include but are not limited to, alkyltrialkoxysilanes such as methyltrimethoxysilane (MTM) ethyltrimethoxysilane and methyltriethoxysilane, alkenyltrialkoxy silanes such as vinyltrimethoxysilane and vinyltriethoxysilane, isobutyltrimethoxysilane (iBTM). Other suitable silanes include, phenyltrimethoxysilane, alkoxytrioximosilane, alkenyltrioximosilane, 3,3,3-trifluoropropyltrimethoxysilane, methyltris(methylethylketoximo)silane, vinyl-tris-methylethylketoximo)silane, methyltris(methylethylketoximino)silane, methyltris(isopropenoxy)silane, vinyltris(isopropenoxy)silane, (ethylenediaminepropyl)trimethoxysilane, vinyl trimethoxysilane, tetraalkylorthosilicate having the general formula SiOR₄, tetraethoxysilane, mercapto functional-silanes, glycidyloxypropyl trimethoxysilane, and any combination thereof.

In the case of titanates, zirconates and/or aluminum organometallic compounds, or any combination thereof, the titanates may include, but are not limited to, tetrabutyl titanate, tetrapropoxy titanate, tetraethoxy titanate, tetraamyl titanate, titanium di-isopropoxy bis ethylacetoacetate, titanium di-isopropoxy bis acetylacetonate, and any combination thereof; the zirconates may include, but are not limited to, zirconium acetylacetonate and the aluminum organometallic compounds may be but is not limited to, aluminum acetylacetonate.

In one embodiment, the waterborne or solvent borne binder composition may be a primer composition providing the binder utilised is present in an amount of at least 20 wt. % of said primer composition, alternatively from 20 to 75 wt. % of said binder is in the composition alternatively from 20 to 70 wt. % of said binder is in the composition.

A primer is a preparatory coating applied on to a substrate and allowed to dry and/or cure to provide improved adhesion between the substrate and a coating subsequently applied thereon. The primer is intended to provide enhanced adhesion between said substrate and the coating. However, the use of primers is often not preferred because they can be unreliable, can have quality control and reliability issues and traditionally contain high proportions of organic solvents which evaporate during the drying/curing process often resulting in undesirable volatile organic compound (VOC) environmental issues.

A small number of commercial primers comprise at least 20 wt. % binder in the primer composition. Such primers are designed to be film forming and adhesion promoting for room temperature vulcanisable (RTV) silicone compositions when applied on substrates at room temperature i.e., typically between 20 and 25°C). However, these are not usually required for the adhesion of cured silicone materials to porous substrates such as stone, marble, brick, concrete, cement and other cementitious substrates at room temperature. Furthermore, there is no teaching of a need apply primers to porous substrates such as stone, marble, brick, concrete, cement and other cementitious substrates at temperatures of at least 40°C and it is believed no prior art suggesting that the application of such primer compositions on substrates at a temperature of at least 40°C would prevent or substantially prevent the bubbling issues in one-part room temperature vulcanisable (RTV) silicone compositions which occur at those temperatures. Therefore, the method described herein was a surprising development which appears to solve a major issue in hot countries. Without being tied to current theories it is believed that applying the waterborne or solvent borne binder composition leads to the formation of a resilient binder film which blocks pores on the substrate surface and consequently prevents the bubbling effect when a one-part room temperature vulcanisable (RTV) silicone compositions is later applied on top of the resilient binder film.

In a further embodiment, it was determined that, if desired, a predetermined amount of binder could be introduced into a primer composition to form a waterborne or solvent borne binder composition comprising at least 20 wt. % of binder in the primer composition, the binder being selected from (meth)acrylic resin, poly(meth)acrylic acid, polyvinyl acetate, polyvinylpyrrolidone, polyvinyl butyral, polyurethane or a silicone resin of the structure

M₍ₐ₎D_{(b)}T_{(c)}Q_{(d)}

Where 0<a<1, b≥0, c ≥ 0, d ≥ 0, c + d is >0, a + b + c + d= 1, and a + d ≠ 1 when a, b, c and d are mole fractions or a mixture thereof. The adhesive properties of the waterborne or solvent borne binder composition, when comprising primers or modified primers, containing additional binder, are considered superfluous for this application providing that when applied on to a hot porous substrate at 40°C, the modified primer composition is able to form a suitable continuous resilient binder film. Any suitable primers may be utilised for this application, providing they contain the pre-requisite amount of binder (at least 20 wt. %) in the composition thereof or they may be modified to do so. Such primers may be waterborne or solvent borne. In the case of solvent borne primers the solvents may be any of those listed above for use in binder compositions. They may contain a wide variety of other ingredients, for example one or more silanes with at least three hydrolyzable groups per molecule and catalysts for example titanates, zirconates and/or aluminum organometallic compound as described above. They may additionally include one or more organotin compounds such as but not limited to, alkyltin ester compounds such as dibutyltin dioctoate, dibutyltin dimaleate, butyltin 2-ethylhexoate dimethyl tin di-neodecyl ester, or dibutyltin dilaurate, dibutyl tin acetate and dibutyl tin 2-ethyl hexanoate, and any combination thereof.

Any suitable silicone sealant primer suitable for priming the porous substates described herein, namely construction and/or building materials which are used to form the exterior of buildings such as concrete, marble, brick and stone may be used as the waterborne or solvent borne binder composition herein. For example, commercial primers which may be used include DOWSIL^{™} Construction Primer B, and DOWSIL^{™} Construction Primer P and commercial primers which may be used as the waterborne or solvent borne binder composition upon modification with the addition of binder may include DOWSIL^{™} 1200 OS Primer and DOWSIL^{™} Primer-C all of which are commercially available from Dow Silicones Corporation of Midland Michigan USA. Preferably when commercial primers are being modified, the binder(s) being added to the primer and the primer itself are miscible in the combination utilised.

In step (i) of the process described above, the waterborne or solvent borne binder composition comprising at least 20 wt. % of said binder selected from (meth)acrylic resin, poly(meth)acrylic acid, polyvinyl acetate, polyvinylpyrrolidone, polyvinyl butyral, polyurethane or a silicone resin as depicted above or a mixture of two or more thereof, is applied onto the surface of a hot porous substrate at a temperature of at least 40°C. The hot porous substates are construction and/or building materials which are used to form the exterior of buildings such as stone, marble, brick, concrete, cement and other cementitious substrates, e.g., in the case of stone the substrate may be a stone façade which can be heated to temperatures much greater than 40°C in direct sunlight.

Any suitable silicone sealant primer suitable for priming the porous substates described herein, namely construction and/or building materials which are used to form the exterior of buildings such as concrete, marble, brick and stone may be used in this disclosure. The said waterborne or solvent borne binder composition is brought into contact with the hot porous surface by conventional means such as by extrusion, coating, injection, knifing, wiping and rolling. The surface of the porous substrate is at a temperature of at least 40°C.

The binder composition may be prepared by mixing the binder and a selected solvent together and simultaneously or subsequently introducing any additional ingredients. Alternatively, if the waterborne or solvent borne binder composition being used is a modified primer composition, a predetermined amount of binder can be mixed into the primer composition to ensure that the binder composition applied on to the hot porous substrate surface at a temperature of at least 40°C comprises at least 20 wt. % of binder in the modified primer composition. The resulting binder composition may be in the form of a solution, an emulsion or a dispersion depending on the solubility of the other ingredients in the solvents.

In step (ii) of the process the waterborne or solvent borne binder composition is allowed to dry and/or cure enabling the binder to coalesce and form a continuous resilient binder film on the hot porous substrate. The resulting continuous resilient binder film incorporates all non-volatile components of the waterborne or solvent borne binder composition and as such if a modified primer is being used all non-volatile components of the modified silicone sealant primer. Indeed, it is possible, that one or more of the ingredients of the waterborne or solvent borne binder composition being applied as herein may react with the binder during the formation of the continuous resilient binder film. No method of heating etc. is required to dry/cure the waterborne or solvent borne binder composition given the temperature of the hot porous substrate and caused by the sun/air in the vicinity of the substrate. The climatic elevated temperatures will in fact accelerate the drying/curing period compared to when dried/cured at e.g., temperatures between 20 and 25°C.

In step (iii) a one-part room temperature vulcanisable (RTV) silicone composition comprising organopolysiloxane polymers having at least two groups per molecule selected from alkoxy groups, hydroxyl groups or a combination thereof and titanate-based or zirconate-based catalysts is applied and cured on the surface of the continuous resilient binder film resulting from step (ii). It is applied on top of the continuous resilient binder film and then is allowed to cure at the environmental temperature at the time of application. The method herein prevents or minimises unwanted bubbling issues when applying one-part room temperature vulcanisable (RTV i.e., typically between 20 and 25°C) silicone compositions on hot porous substrates at temperatures of greater than 40°C because the continuous resilient binder film produced by application of the waterborne or solvent borne binder composition on the hot porous substrate surface will effectively insulate the one-part room temperature vulcanisable (RTV) silicone compositions from the surface of the substrate and prevent direct contact between the substrate surface and the one-part room temperature vulcanisable (RTV) silicone composition during the curing process when the bubbling occurs.

Most one-part room temperature vulcanisable (RTV) silicone compositions having at least two groups per molecule selected from alkoxy groups, hydroxyl groups or a combination thereof and titanate-based or zirconate-based catalysts typically comprise a minimum of four ingredients
1. organopolysiloxane polymers having at least two groups per molecule selected from alkoxy groups, hydroxyl groups or a combination thereof, often at least two trialkoxy-silyl terminal groups per molecule;
2. One or more suitable cross-linker(s);
3. filler; and
4. titanate-based or zirconate-based catalysts.

The one-part room temperature vulcanisable (RTV) silicone compositions having at least two groups per molecule selected from alkoxy groups, hydroxyl groups or a combination thereof and titanate-based or zirconate-based catalysts often also comprise a variety of additives which are incorporated in the composition to meet necessary properties required by the applicant/construction business with which they are being used. Such additives often include one or more of adhesion promotors, diluents (e.g., plasticisers and/or extenders), chain extenders, flame retardants, solvent resistant additives, biocides and the like are often also incorporated into these compositions as and when required.

One advantage of the current method is that by preparing a continuous resilient binder film on the hot porous substrate prior to application of a one-part room temperature vulcanisable (RTV) silicone composition having at least two groups per molecule selected from alkoxy groups, hydroxyl groups or a combination thereof and titanate-based or zirconate-based catalysts, any suitable one-part room temperature vulcanisable (RTV) silicone composition may be applied onto the hot porous substrate at a temperature of at least 40°C. One example of a typical one-part room temperature vulcanisable (RTV) silicone composition is provided below, but it is to be understood that such a composition is being provided merely as an example of the sort of compositions which might be selected for use and is in no way intended to be restrictive on the scope of the one-part room temperature vulcanisable (RTV) silicone compositions which may now be applied onto the hot porous substrates given this new process.

A one-part room temperature vulcanisable (RTV) silicone composition having at least two groups per molecule selected from alkoxy groups, hydroxyl groups or a combination thereof and titanate-based or zirconate-based catalysts can be as follows:
(I) Organopolysiloxane polymers having at least two groups per molecule selected from alkoxy groups, hydroxyl groups or a combination thereof, often at least two trialkoxy-silyl terminal groups per molecule; for example
   an organopolysiloxane polymer having at least two groups per molecule selected from alkoxy groups, hydroxyl groups or a combination thereof of the formula

      X₃₋ₙRₙSi-Z_{d}- (R¹_{y}SiO_{(4-y/)2})_{z}-SiR¹₂ -Z_{d}-Si-RₙX₃₋ₙ (1)
   in which each X is independently a hydroxyl group or an alkoxy group, each R is an alkyl, alkenyl or aryl group, each R¹ is an X group, alkyl group, alkenyl group or aryl group and Z is a divalent organic group;
   d is 0 or 1,
   n is 0, 1 or 2, y is 0, 1 or 2, and preferably 2 and z is an integer such that said organopolysiloxane polymer has a viscosity of from 30,000 to 150,000 mPa.s at 25°C, in an amount of from 30 to 90% by weight of the composition;
(II) A suitable cross-linker having three or more hydrolysable groups per molecule,
(III) A filler selected from precipitated silica, fumed silica or precipitated calcium carbonate or a mixture of two or more thereof;
(IV) titanate-based or zirconate-based catalysts

### Organopolysiloxane polymer having at least two groups per molecule selected from alkoxy groups, hydroxyl groups or a combination thereof (I)

The organopolysiloxane polymer having at least two groups per molecule selected from alkoxy groups, hydroxyl groups or a combination thereof (I) has the following formula

X₃₋ₙRₙSi-Z_{d}- (R¹_{y}SiO_{(4-y)/2})_{z}-SiR¹₂ -Zₐ-Si-RₙX₃₋ₙ (1)

In the above formula each X is independently a hydroxyl group or an alkoxy group, providing that each polymer contains at least two groups per molecule selected from alkoxy groups, hydroxyl groups or a combination thereof (hence there must be at least two X groups per molecule. In one embodiment all X groups may be a hydroxyl group or the same or different alkoxy groups. Preferably said each alkoxy group has between 1 and 10 carbons, Illustrative alkoxy groups are methoxy, ethoxy, propoxy, isopropoxy, n-butoxy, t-butoxy, isobutoxy, pentoxy, hexoxy and 2-ethylhexoxy; dialkoxy groups, such as methoxymethoxy or ethoxymethoxy and alkoxyaryloxy, such as ethoxyphenoxy groups; alternatively, each X is an alkoxy group having from one and six carbons, alternatively having from one and four carbons or alternatively is a methoxy or ethoxy group.

Each R group is an alkyl, alkenyl or aryl group, alternatively each R is an alkyl group having from 1 to 6 carbons, an alkenyl group having from 2 to 6 carbons such as vinyl, allyl and hexenyl groups or an aryl group having from 6 to 12 carbons; alternatively each R is an alkyl group having from 1 to 6 carbons, or an aryl group having from 6 to 12 carbons; alternatively each R is an alkyl group having from 1 to 6 carbons, alternatively each R is an ethyl group or a methyl group. In one embodiment R may include substituted aliphatic organic groups such as 3,3,3-trifluoropropyl groups aminoalkyl groups, polyaminoalkyl groups, and/or epoxyalkyl groups.

Each R¹ is an X group, or an R group, with the proviso that cumulatively at least two X groups and/or R¹ groups per molecule are alkoxy groups. alternatively each R¹ is an R group. It is possible that some R¹ groups may be siloxane branches off the polymer backbone which branches may have terminal groups as hereinbefore described.

Each Z is a divalent organic group, typically an alkylene having from 2 to 10 carbons, such as for example, an ethylene, propylene, butylene, pentylene and/or hexylene group; alternatively, an alkylene group having 2 to 6 carbons, alternatively an alkylene group having from 2 to 5 carbons. Typically, when each X group is a hydroxyl group d is 0 (zero) and when each X is an alkoxy group d is 1. When X is a mixture of hydroxyl groups and alkoxy groups each d may be either 0 (zero) or 1. Subscript n is zero, 1, or 2, alternatively is 0 (zero) or 1, alternatively is 0 (zero); in one embodiment when n is zero each X is an alkoxy group and d is 1. Each subscript y is 0, 1 or 2, and preferably 2. Whilst y is 0, 1 or 2, substantially y= 2, e.g., at least 90%, alternatively 95% of R¹_{y}SiO_{(4-y)/2} groups are characterized with y = 2. Subscript z is an integer such that said organopolysiloxane polymer has a viscosity of from 30,000 to 150,000 mPa.s, alternatively from 40,000 to 140,000mPa.s at 25°C, therefore z is an integer from 300 to 2000.

The viscosity of component (I) may be measured by any suitable method such as in accordance with corporate test method CTM 0050, which is publicly available, and which is based on ASTM D 1084-16 method B, using a Brookfield HBDV-III Ultra Rheometer equipped with a cone-and-plate geometry using spindle 52 under rotation speed of 5 rpm for 2 min. All viscosity measurements herein are taken at 25°C unless otherwise indicated.

,Component (I) is present in the one-part room temperature vulcanisable (RTV) silicone composition in an amount of from 30 to 90 wt. % of the composition, alternatively 35 to 75%, alternatively 35 to 60 wt. % of the composition.

Organopolysiloxane polymer (I) can be a single siloxane represented by Formula (1) or it can be mixtures of organopolysiloxane polymers represented by the aforesaid formula. Hence, it may be a "siloxane polymer mixture" so organopolysiloxane polymer (I) is meant to include any individual organopolysiloxane polymer (I) or mixtures of organopolysiloxane polymer (I).

The Degree of Polymerization (DP), (i.e., in the above formula substantially z), is usually defined as the number of monomeric units in a macromolecule or polymer or oligomer molecule of silicone. Synthetic polymers invariably consist of a mixture of macromolecular species with different degrees of polymerization and therefore of different molecular weights. There are different types of average polymer molecular weight, which can be measured in different experiments. The two most important are the number average molecular weight (Mn) and the weight average molecular weight (Mw). The Mn and Mw of a silicone polymer can be determined by gel permeation chromatography (GPC) with precision of about 10-15% using polystyrene standards.

This technique is standard and yields Mw, Mn and polydispersity index (PI). The degree of polymerisation (DP) =Mn/Mu where Mn is the number-average molecular weight coming from the GPC measurement and Mu is the molecular weight of a monomer unit. PI=Mw/Mn. The DP is linked to the viscosity of the polymer via Mw, the higher the DP, the higher the viscosity. In the present disclosure the number average molecular weight and weight average molecular weight values of component (I) herein may, for example, be determined using a Waters 2695 Separations Module equipped with a vacuum degasser, and a Waters 2414 refractive index detector (Waters Corporation of MA, USA). The analyses may then be performed using certified grade toluene flowing at 1.0 mL/min as the eluent. Data collection and analyses may be performed using Waters Empower GPC software.

### A suitable cross-linker having three or more hydrolysable groups per molecule (II)

Component (II) is one or more cross-linkers comprising a silicon containing compound having at least three hydroxyl and/or hydrolysable groups per molecule which are reactive with the alkoxy and optionally hydroxyl groups in component (I).

The silicon containing compound having at least at least three hydroxyl and/or hydrolysable groups per molecule of component (II) may be for example:-
one or more silanes having at least 3 hydrolysable groups per molecule group;
one or more dipodal silanes having at least 2 silyl groups, each silyl group containing at least one hydrolysable group or
other suitable silicon containing compounds having at least three hydroxyl and/or hydrolysable groups per molecule.

For the sake of the disclosure herein a dipodal silanes comprises two silicon atoms each having at least one hydrolysable group, where the silicon atoms are separated by an organic polymer chain or a siloxane polymer chain or a copolymer chain. Typically, each silyl group on the dipodal silanes may be a terminal group.

The hydrolysable groups of component (II) may be selected from acyloxy groups (for example, acetoxy, octanoyloxy, and benzoyloxy groups); ketoximino groups (for example dimethyl ketoximo, and isobutylketoximino); alkoxy groups (for example methoxy, ethoxy, and propoxy) and alkenyloxy groups (for example isopropenyloxy and 1-ethyl-2-methylvinyloxy). In some instances, the hydrolysable group may include hydroxyl groups. Alternatively, said hydrolysable groups are selected from acyloxy groups; alkoxy groups and/ alkenyloxy groups. In a preferred embodiment the hydrolysable groups are alkoxy groups having from 1 to 10 carbons.

Hence, when component (II) is a silane, the silane may have the following structure

R⁸ⱼSi(OR⁹)₄₋ⱼ

where each R⁹ may be the same or different and is hydrogen or an alkyl group containing at least one carbon, alternatively from 1 to 20 carbons, alternatively from 1 to 10 carbons alternatively from 1 to 6 carbons. The value of j is 0 or 1. Whilst each R⁹ group may be the same or different, it is preferred that at least two R⁹ groups are the same, alternatively at least three R⁹ groups are the same and alternatively, when j is 0, all R⁹ groups are the same.

Hence, specific examples of the reactive silane (II) when j is zero include tetraethylorthosilicate, tetrapropylorthosilicate, tetra n-butylorthosilicate and tetra t-butylorthosilicate.

When j is 1 the group R⁸ is present. R⁸ is a silicon-bonded organic group selected from a substituted or unsubstituted straight or branched monovalent hydrocarbon group having at least one carbon, a cycloalkyl group, an aryl group, an aralkyl group or any one of the foregoing wherein at least one hydrogen atom bonded to carbon is substituted by a halogen atom, or an organic group having an epoxy group, a glycidyl group, an acyl group, a carboxyl group, an ester group, an amino group, an amide group, a (meth)acryl group, a mercapto group, an isocyanurate group or an isocyanate group.

Unsubstituted monovalent hydrocarbon groups, suitable as R⁸, may include alkyl groups e.g., methyl, ethyl, propyl, and other alkyl groups, alkenyl groups such as vinyl, cycloalkyl groups may include cyclopentane groups and cyclohexane groups. Substituted groups suitable in or as R⁸, may include, for the sake of example, 3-hydroxypropyl groups, 3-(2-hydroxyethoxy)alkyl groups, halopropyl groups, 3-mercaptopropyl groups, trifluoroalkyl groups such as 3,3,3-trifluoropropyl, 2,3-epoxypropyl groups, 3,4-epoxybutyl groups, 4,5-epoxypentyl groups, 2-glycidoxyethyl groups, 3-glycidoxypropyl groups, 4-glycidoxybutyl groups, 2-(3,4-epoxycyclohexyl) ethyl groups, 3-(3,4-epoxycyclohexyl)alkyl groups, aminopropyl groups, N-methylaminopropyl groups, N-butylaminopropyl groups, N,N-dibutylaminopropyl groups, 3-(2-aminoethoxy)propyl groups, methacryloxyalkyl groups, acryloxyalkyl groups, carboxyalkyl groups such as 3-carboxypropyl groups, 10-carboxydecyl groups.

Specific examples of suitable silane cross-linkers having at least 3 hydroxyl and/or hydrolysable groups per molecule (II), include but are not limited to vinyltrimethoxysilane, methyltrimethoxysilane, ethyltriethoxysilane, ethyltrimethoxysilane, propyltriethoxysilane, isobutyltriethoxysilane, isobutyltrimethoxysilane, vinyltriethoxysilane, phenyltriethoxysilane, phenyltrimethoxysilane, methyltris(isopropenoxy)silane or vinyltris(isopropenoxy)silane, 3-hydroxypropyl triethoxysilane, 3-hydroxypropyl trimethoxysilane, 3-(2-hydroxyethoxy)ethyltriethoxysilane, 3-(2-hydroxyethoxy)ethyltrimethoxysilane, chloropropyl triethoxysilane, 3-mercaptopropyl triethoxysilane, 3,3,3-trifluoropropyl triethoxysilane, 2,3-epoxypropyl triethoxysilane, 2,3-epoxypropyl trimethoxysilane, 3,4-epoxybutyl triethoxysilane, 3,4-epoxybutyl trimethoxysilane, 4,5-epoxypentyl triethoxysilane, 4,5-epoxypentyl trimethoxysilane, 2-glycidoxyethyl triethoxysilane, 2-glycidoxyethyl trimethoxysilane, 3-glycidoxypropyl triethoxysilane, 3-glycidoxypropyl trimethoxysilane, 4-glycidoxybutyl triethoxysilane, 4-glycidoxybutyl trimethoxysilane, 2-(3,4-epoxycyclohexyl) ethyl triethoxysilane, 3-(3,4-epoxycyclohexyl)ethyl triethoxysilane, aminopropyl triethoxysilane, aminopropyl trimethoxysilane, N-methylaminopropyl triethoxysilane, N-methylaminopropyl trimethoxysilane, N-butylaminopropyl trimethoxysilane, N,N-dibutylaminopropyl triethoxysilane, 3-(2-aminoethoxy)propyl triethoxysilane, methacryloxypropyl triethoxysilane, tris(3-triethoxysilylpropyl) isocyanurate, acryloxypropyl triethoxysilane, 3-carboxypropyl triethoxysilane and 10-carboxydecyl triethoxysilane.

In a further embodiment component (II) may be a dipodal silane i.e., a silyl functional molecule having at 2 silyl groups each having at least 1 and up to 3 hydrolysable groups, alternatively each silyl group has at least 2 hydrolysable groups wherein the silyl groups are separated by a polymeric backbone. The polymeric backbone may be an organic polymeric backbone i.e., component (II) may comprise organic based polymers with silyl terminal groups e.g., silyl polyethers, silyl acrylates and silyl terminated polyisobutylenes. In the case of silyl polyethers the polymer chain is based on polyoxyalkylene based units. Such polyoxyalkylene units preferably comprise a linear predominantly oxyalkylene polymer comprised of recurring oxyalkylene units, (-CₙH₂ₙ-O-) illustrated by the average formula (-CₙH₂ₙ-O-)_{y} wherein n is an integer from 2 to 4 inclusive and y is an integer of at least four. Likewise, the viscosity will be ≤ 1000 at 25°C mPa.s, alternatively 250 to 1000mPa.s at 25°C alternatively 250 to 750mPa.s at 25°C and will have a suitable number average molecular weight of each polyoxyalkylene polymer block present. The viscosity may be measured using any suitable means e.g., a Modular Compact Rheometer (MCR) 302 from Anton Paar GmbH of Graz, Austria using the most suitable settings and plates for the viscosity concerned as described above. Moreover, the oxyalkylene units are not necessarily identical throughout the polyoxyalkylene monomer but can differ from unit to unit. A polyoxyalkylene block or polymer, for example, can be comprised of oxyethylene units, (-C₂H₄-O-); oxypropylene units (-C₃H₆-O-); or oxybutylene units, (-C₄H₈-O-); or mixtures thereof.

In the case of such organic based cross-linkers the molecular structure can be straight chained, branched, cyclic or macromolecular, i.e., an organic polymer chain bearing alkoxy functional end groups.

In one embodiment, the dipodal silane may be a polymer containing two silyl groups, each containing at least one hydrolysable group such as described by the following formula

(R⁷O)ₘ(Y¹)₃₋ₘ - Si (CH₂)ₓ - ((NHCH₂CH₂)ₜ - Q(CH₂)ₓ)ₛ - Si(OR⁷)ₘ(Y¹)₃₋ₘ
where R⁷ is a C₁₋₁₀ alkyl group, Y¹ is an alkyl groups containing from 1 to 8 carbons,
Q is a chemical group containing a heteroatom with a lone pair of electrons e.g., an amine, N-alkylamine or urea; each x is an integer of from 1 to 6, t is 0 or 1; each m is independently 1, 2 or 3 and s is 0 or 1.

Specific examples of suitable dipodal silanes include 1,6-bis (trimethoxysilyl)hexane (alternatively known as hexamethoxydisilylhexane), bis (trialkoxysilylalkyl)amines, bis (dialkoxyalkylsilylalkyl)amine, bis (trialkoxysilylalkyl) N-alkylamine, bis (dialkoxyalkylsilylalkyl) N-alkylamine, bis (trialkoxysilylalkyl)urea, bis (dialkoxyalkylsilylalkyl) urea, bis (3-trimethoxysilylpropyl)amine, bis (3-triethoxysilylpropyl)amine, bis (4-trimethoxysilylbutyl)amine, bis (4-triethoxysilylbutyl)amine, bis (3-trimethoxysilylpropyl)N-methylamine, bis (3-triethoxysilylpropyl) N-methylamine, bis (4-trimethoxysilylbutyl) N-methylamine, bis (4-triethoxysilylbutyl) N-methylamine, bis (3-trimethoxysilylpropyl)urea, bis (3-triethoxysilylpropyl)urea, bis (4-trimethoxysilylbutyl)urea, bis (4-triethoxysilylbutyl)urea, bis (3-dimethoxymethylsilylpropyl)amine, bis (3-diethoxymethyl silylpropyl)amine, bis (4-dimethoxymethylsilylbutyl)amine, bis (4- diethoxymethyl silylbutyl)amine, bis (3-dimethoxymethylsilylpropyl) N-methylamine, bis (3-diethoxymethyl silylpropyl) N-methylamine, bis (4-dimethoxymethylsilylbutyl) N-methylamine, bis (4- diethoxymethyl silylbutyl) N-methylamine, bis (3-dimethoxymethylsilylpropyl)urea, bis (3-diethoxymethyl silylpropyl)urea, bis (4-dimethoxymethylsilylbutyl)urea, bis (4- diethoxymethyl silylbutyl)urea, bis (3-dimethoxyethylsilylpropyl)amine, bis (3-diethoxyethyl silylpropyl)amine, bis (4-dimethoxyethylsilylbutyl)amine, bis (4- diethoxyethyl silylbutyl)amine, bis (3-dimethoxyethylsilylpropyl) N-methylamine, bis (3-diethoxyethyl silylpropyl) N-methylamine, bis (4-dimethoxyethylsilylbutyl) N-methylamine, bis (4- diethoxyethyl silylbutyl) N-methylamine, bis (3-dimethoxyethylsilylpropyl)urea bis (3-diethoxyethyl silylpropyl)urea, bis (4-dimethoxyethylsilylbutyl)urea and/or bis (4- diethoxyethyl silylbutyl)urea; bis (triethoxysilylpropyl)amine, bis (trimethoxysilylpropyl)amine, bis (trimethoxysilylpropyl)urea, bis (triethoxysilylpropyl)urea, bis (diethoxymethylsilylpropyl)N-methylamine; di or trialkoxy silyl terminated polydialkyl siloxane, di or trialkoxy silyl terminated polyarylalkyl siloxanes, di or trialkoxy silyl terminated polypropyleneoxide, polyurethane, polyacrylates; polyisobutylenes; di or triacetoxy silyl terminated polydialkyl; polyarylalkyl siloxane; di or trioximino silyl terminated polydialkyl; polyarylalkyl siloxane; di or triacetonoxy terminated polydialkyl or polyarylalkyl. The component (II) used may also comprise any combination of two or more of the above.

Other suitable silicon containing compounds having at least three hydroxyl and/or hydrolysable groups per molecule include for the sake of example, 1,3,5- tris(trialkoxysilylalkyl)isocyanurate for example a 1,3,5- tris(trialkoxysilylalkyl)isocyanurate having the following structure :

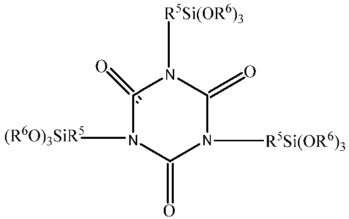

Wherein each R⁵ may be the same or different and is a divalent alkylene group having from 2 to 10 carbons, alternatively from 2 to 6 carbons, alternatively from 2 to 5 carbons and each R⁶ is the same or different and is an alkyl group having from 1 to 10 carbons alternatively from 1 to 6 carbons, alternatively from 1 to 4 carbons, alternatively a methyl group or an ethyl group. An example being tris-(trimethoxysilylpropyl) isocyanurate as depicted below where each R⁵ is a propylene group and each R⁶ is a methyl group.

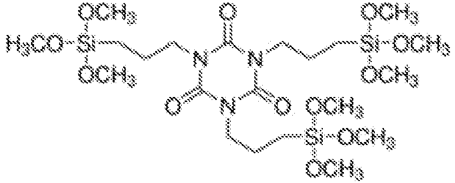

The one or more cross-linkers having at least 3 hydroxyl and/or hydrolysable groups per molecule (II) is present in an amount of from 0.1 to 5% by weight of the composition, present in an amount of from 0.5 to 4% by weight of the composition, alternatively in an amount of from 1 to 3.5% by weight of the composition.

### One or more reinforcing fillers (III)

The one or more reinforcing fillers identified as component (III) herein may for example be selected from precipitated silica, fumed silica, precipitated calcium carbonate, or a mixture of two or more thereof. Typically, the surface area of the reinforcing filler (III) is at least 15 m²/g in the case of precipitated calcium carbonate measured in accordance with the BET method (ISO 9277: 2010), alternatively 15 to 50 m²/g, alternatively 15 to 25 m²/g.

Silica reinforcing fillers have a typical surface area of at least 50 m²/g in accordance with the BET method (ISO 9277: 2010). In the case of high surface area fumed silica and/or high surface area precipitated silica, these may have surface areas of from 75 to 400 m²/g measured in accordance with the BET method (ISO 9277: 2010), alternatively of from 100 to 300 m²/g in accordance with the BET method (ISO 9277: 2010).

The reinforcing fillers (III) may be hydrophobically treated for example with one or more aliphatic acids, e.g., a fatty acid such as stearic acid or a fatty acid ester such as a stearate, or with organosilanes, organosiloxanes, or organosilazanes hexaalkyl disilazane or short chain siloxane diols to render the filler(s) hydrophobic and therefore easier to handle and obtain a homogeneous mixture with the other adhesive components. Specific examples organosilanes, organosiloxanes, or organosilazanes may include, but are not restricted to, silanol terminated trifluoropropylmethylsiloxane, silanol terminated vinyl methyl (ViMe) siloxane, silanol terminated methyl phenyl (MePh) siloxane, liquid hydroxyldimethyl-terminated polydiorganosiloxane containing an average from 2 to 20 repeating units of diorganosiloxane in each molecule, hydroxyldimethyl terminated phenylmethyl Siloxane, hexaorganodisiloxanes, such as hexamethyldisiloxane, divinyltetramethyldisiloxane; hexaorganodisilazanes, such as hexamethyldisilazane (HMDZ), divinyltetramethyldisilazane and tetramethyldi(trifluoropropyl)disilazane; hydroxyldimethyl terminated polydimethylmethylvinyl siloxane, octamethyl cyclotetrasiloxane, and silanes including but not limited to methyltrimethoxysilane, dimethyldimethoxysilane, vinyltrimethoxysilane, methyltriethoxysilane, vinyltriethoxysilane, chlorotrimethyl silane, dichlorodimethyl silane, trichloromethyl silane.

The surface treatment of the fillers makes them easily wetted by component (I). These surface modified fillers are preferably in a finely divided form and do not clump and can be homogeneously incorporated into the silicone polymer (I). This results in improved room temperature mechanical properties of the uncured compositions. The fillers may be pre-treated or may be treated in situ when being mixed with component (I). A small amount of water can be added together with the silica treating agent(s) as processing aid.

Depending on the filler(s) chosen the reinforcing fillers (III) may be present in an amount of from 2.5 to 60 % by weight (wt. %) of the composition. In the case when the selected fillers are precipitated silica and/or fumed silica or a combination thereof the inorganic fillers (III) are present in a range of from about 5.0 to 35 wt. % of the composition, alternatively of from 5 to 30 wt. % of the composition, alternatively of from 5 to 25 wt. % of the composition. However, when reinforcing filler (III) is precipitated calcium carbonate, the composition will tend to include a larger wt. % of the composition, e.g., from 25 to 60 wt. % of the composition, alternatively of from 30 to 60 wt. % of the composition, alternatively of from 35 to 55 wt. % of the composition. When component (III) is a mixture of silica and precipitated calcium carbonate the wt. % will typically somewhere therebetween.

### A catalyst comprising a titanate-based compound, a zirconate-based compound or a mixture thereof (IV)

Component (IV) comprises a condensation catalyst which increases the speed at which the composition cures. Titanate-based and/or zirconate-based catalysts may comprise a compound according to the general formula Ti[OR²²]₄ or Zr[OR²²]₄ where each R²² may be the same or different and represents a monovalent, primary, secondary or tertiary aliphatic hydrocarbon group which may be linear or branched containing from 1 to 10 carbon atoms. Optionally the titanate may contain partially unsaturated groups. However, preferred examples of R²² include but are not restricted to methyl, ethyl, propyl, isopropyl, butyl, tertiary butyl and a branched secondary alkyl group such as 2, 4-dimethyl-3-pentyl. In one embodiment each R²² is the same, and R²² is an isopropyl, branched secondary alkyl group or a tertiary alkyl group, in particular, tertiary butyl. Suitable examples include for the sake of example, tetra n-butyl titanate, tetra t-butyl titanate, tetra t-butoxy titanate, tetraisopropoxy titanate and zirconate equivalents.

Alternatively, the titanate/zirconate may be chelated. The chelation may be with any suitable chelating agent such as an alkyl acetylacetonate such as methyl or ethyl acetylacetonate. Alternatively, the titanate may be monoalkoxy titanates bearing three chelating agents such as for example 2-propanolato, tris isooctadecanoato titanate and diisopropoxydiethylacetoacetate titanate or titanium ethyl acetoacetate complexes mixed with a methyl-trimethoxy silane. Component (IV) may be present in any suitable amount, such as from 0.05 wt. % to 1.5 wt. % of the composition, alternatively in an amount of from 0.05 wt. % to 1.25 wt. % of the composition, alternatively in an amount of from 0.1 wt. % to 1.0 wt. % of the composition, alternatively in an amount of from 0.1 wt. % to 0.75 wt. % of the composition.

### Optional Additives

Optional additives may be used if necessary. These may include non-reinforcing fillers, pigments, chain extenders, adhesion promotors rheology modifiers, cure modifiers, drying agents, extenders, flame retardants, plasticizers, end-blockers, anti-aging additives, UV absorbers, antioxidants, light-stabilizers, fungicides and/or biocides and the like, as well as combinations thereof. It will be appreciated that some of the additives may be included in more than one list of additives. Such additives would then have the ability to function in all the different ways referred to.

### Non-reinforcing fillers

Non-reinforcing fillers, which might be used in addition to component (III) herein include aluminite, calcium sulphate (anhydrite), gypsum, nepheline, svenite, quartz, calcium sulphate, magnesium carbonate, ground calcium carbonate, clays such as kaolin, aluminium trihydroxide, magnesium hydroxide (brucite), graphite, copper carbonate, e.g., malachite, nickel carbonate, e.g., zarachite, barium carbonate, e.g., witherite and/or strontium carbonate e.g., strontianite.

Aluminium oxide, silicates from the group consisting of olivine group; garnet group; aluminosilicates; ring silicates; chain silicates; and sheet silicates. The olivine group comprises silicate minerals, such as but not limited to, forsterite and Mg₂SiO₄. The garnet group comprises ground silicate minerals, such as but not limited to, pyrope; Mg₃Al₂Si₃O₁₂; grossular; and Ca₂Al₂Si₃O₁₂. Aluminosilicates comprise ground silicate minerals, such as but not limited to, sillimanite; Al₂SiO₃; mullite; 3Al₂O₃.2SiO₂; kyanite; and Al₂SiO₅.

The ring silicates group comprises silicate minerals, such as but not limited to, cordierite and Al₃(Mg,Fe)₂[Si₄AlO₁₈]. The chain silicates group comprises ground silicate minerals, such as but not limited to, wollastonite and Ca[SiO₃].

The sheet silicates group comprises silicate minerals, such as but not limited to, mica; K₂AI₁₄[Si₆Al₂O₂₀](OH)₄; pyrophyllite; Al₄[Si₈O₂₀](OH)₄; talc; Mg₆[Si₈O₂₀](OH)₄; serpentine for example, asbestos; Kaolinite; Al₄[SigO₁₀](OH)₈; and vermiculite.

Such additional fillers may also be hydrophobically treated in the same manner as component (III) as described above. When present the non-reinforcing fillers tend to be used to replace some of component (III), hence when component (III) the reinforcing filler is precipitated calcium carbonate and a non-reinforcing filler is also present in the composition the total amount of precipitated calcium carbonate and non-reinforcing filler will still be no more than the upper limit 60 wt. % of the composition. In one embodiment of the composition when component (III) is precipitated calcium carbonate the composition also comprises ground calcium carbonate. When present the non-reinforcing filler may be present in an amount of from greater than zero to 20 wt. % of the composition.

### Pigments

Standard one-part hot porous surface condensation curable silicone compositions may be incorporated herein. The pigments and/or colorants may be coloured, white, black, metal effect, and luminescent e.g., fluorescent and phosphorescent. Pigments are utilized to colour the composition as required. Any suitable pigment may be utilized providing it is compatible with the composition herein. The one-part room temperature vulcanisable (RTV) silicone composition may contain white pigments and/or coloured (non-white) fillers e.g., carbon black.

Typically, the pigments and/or colorants, when particulates, have average particle diameters in the range of from 10 nm to 50 µm, preferably in the range of from 40 nm to 2 µm. The pigments and/or colorants when present are present in the range of from 2, alternatively from 3, alternatively from 5 to 20 wt. % of the composition.

### Rheology modifiers

Rheology modifiers which may be incorporated in the one-part room temperature vulcanisable (RTV) silicone composition include silicone organic co-polymers such as those described in EP0802233 based on polyols of polyethers or polyesters; non-ionic surfactants selected from the group consisting of polyethylene glycol, polypropylene glycol, ethoxylated castor oil, oleic acid ethoxylate, alkylphenol ethoxylates, copolymers or ethylene oxide and propylene oxide, and silicone polyether copolymers; as well as silicone glycols. For some systems these rheology modifiers, particularly copolymers of ethylene oxide and propylene oxide, and silicone polyether copolymers, may enhance the adhesion to substrates, particularly plastic substrates.

### Adhesion Promoters

The one-part room temperature vulcanisable (RTV) silicone composition as hereinbefore described may also comprise an aminosilane adhesion promoter having two or three hydroxyl or alkoxy groups per molecule. The aminosilane adhesion promoter having two or three hydroxyl or alkoxy groups per molecule may comprise:

R¹⁰ₖ(R¹¹O)₃₋ₖSi-Z²-N(H)- (CH₂)_{m'} -NH₂

in which R¹⁰ is an alkyl group containing from 1 to 10 carbon atoms; each R¹¹ may be the same or different and is H or R¹⁰, Z² is a linear or branched alkylene group having from 2 to 10 carbon atoms, m' is from 2 to 10 and k is zero or 1.

R¹⁰ is an alkyl group containing from 1 to 10 carbon atoms, alternatively R¹⁰ is an alkyl group containing from 1 to 6 carbon atoms, alternatively, R¹⁰ is a methyl or ethyl group. Each R¹¹ may be the same or different and is each R¹¹ may be the same or different and is H or R¹⁰, alternatively each R¹¹ is R¹⁰. In one alternative all R¹¹ groups are the same. When the R¹¹ groups are the same, it is preferred that they are methyl or ethyl groups. Z² is a linear or branched alkylene group having from 2 to 10 carbons, alternatively from 2 to 6 carbons, for example Z² may be a propylene group, a butylene group or an isobutylene group. There may be from 2 to 10 m' groups, in one alterative m' may be from 2 to 6, in another alternative m' may be from 2 to 5, in a still further alternative m' may be 2 or 3, alternatively m' is 2.

Other adhesion promoters which may be used include N-(3-(Trimethoxysilyl)propyl)butylamine, bis(trimethoxysilylpropyl)amine, bis[3-(triethoxysilyl)propyl]amine, bis[3-(triethoxysilyl)propyl]amine, aminopropyltriethoxysilane and aminopropyltrimethoxysilane.

The adhesion promoter when present is present in an amount of from 0.1 to 3.75% by weight of the composition, alternatively, in an amount of 0.1- 2.5 % by weight of the composition, alternatively, in an amount of 0.1- 2.0 % by weight of the composition, alternatively, in an amount of 0.2 to 1.0 % by weight of the composition.

### UV and/or light stabilizers

UV and/or light stabilizers may include, for the sake of example include benzotriazole, ultraviolet light absorbers and/or hindered amine light stabilizers (HALS) such as the TINUVIN^{®} product line from Ciba Specialty Chemicals Inc.

### Biocides

Biocides may additionally be utilized in the composition if required. It is intended that the term "biocides" includes bactericides, fungicides and algicides, and the like.

The one-part room temperature vulcanisable (RTV) silicone composition as described above may be prepared by mixing all the ingredients together. Preferably once mixed, unless to be used immediately, the composition is sealed in one or more moisture-tight containers and is stored. In one embodiment filler (III) and/or pigment when present is/are first mixed into the polymer (I), optionally, if required in combination with a hydrophobic treating agent so that the filler and optional pigment may be hydrophobically treated in situ during the mixing into the polymer.

Once the filler is adequately mixed into the polymer (and if desired has been hydrophobically treated) then the remaining components are added in any suitable order to make the complete composition.

For example, in one method the process for making the one-part room temperature vulcanisable (RTV) silicone composition may comprise the following steps:
1) Gradually add the or each reinforcing filler (III) and any non-reinforcing filler, when present, and, if required hydrophobing filler treating agent into the polymer (I) for a predetermined time, under vacuum if deemed necessary; to form a polymer base;
2) The remaining components were then mixed together to form a premix 1;
3) premix 1 was then added into the polymer base and was mixed into the base, under vacuum if deemed necessary;
4) Finally, the mixture was cooled to less that 40°C, releasing the vacuum and, if to be stored package the final composition.

When optional pigment is to be used, the pigment may be introduced prior to the filler(s) or simultaneously with the fillers resulting in a pigmented polymer base after the completion of step 1 above. Optional ingredients such as adhesion promoter(s) may also be added into premix 1.

The one-part room temperature vulcanisable (RTV) silicone composition may be applied on to the continuous resilient binder film, in step (iii) by any suitable means such as by extrusion, coating, injection, knifing and rolling, typically dependent on the viscosity and ability to flow thereof on the continuous resilient binder film. Irrespective of the means of application, it was found that either no bubbles were formed or comparatively much fewer bubbles were formed in the one standard one-part room temperature vulcanisable (RTV) silicone compositions when applied on top of a binder intermediate layer as opposed to be applied direct onto the substrate surface at 40°C or more as opposed to when the said standard one-part room temperature vulcanisable (RTV) silicone compositions are applied directly onto the hot porous substrate surface at a temperature of at least 40°C when much bubbling results leading to very poor adhesion. The reduction in the number and size of bubbles in the cured silicone sealant benefit to the construction industry in hot countries in which substrates regularly reach temperatures of over 40°C during the hottest parts of the day due to the heat from the sun etc. because the significant bubble formation with regards standard sealants has proven to be a major issue for the construction industry because it leads to surface blistering between the curing/cured sealant and the substrate surface resulting in poor adhesion therebetween. These bubbles are unacceptable and increase the volume of the cured product by as much as two or three times compared to the product not cured on a hot porous substrate.

An additional advantage of the present process is that the continuous resilient binder film protects and insulates the one-part room temperature vulcanisable (RTV) silicone compositions from the temperature of the substrate which allows the user to have an increased working time compared to situations where the one-part room temperature vulcanisable (RTV) silicone compositions are applied directly onto the hot porous substrate at 40°C. These tend to cure very quickly at the temperatures concerned because after said one-part room temperature vulcanisable (RTV) silicone composition is applied to the hot porous substrate; it is exposed to atmospheric moisture causing it to undergo accelerated cure.

There is also provided a sealed porous substrate which is the product of the above process. The one-part room temperature vulcanisable (RTV) silicone compositions used herein may be used as a sealant or adhesive or as a weather seal or professional caulking or residential and industrial frame plate adhesive and sealant.

### Examples

All the above corporate test methods (CTM) are available to the public from Dow Silicones Corporation upon request.

A variety of binders and primers were assessed for use as or in the continuous resilient binder film as hereinbefore described. Commercial binders used in the examples were:-
**DOWSIL^{™} 1200 OS Primer** is a Primer for silicone adhesives and sealants which is a colourless liquid having a viscosity at 23°C of 1 mPa.s, a closed cup flash point of 27°C, VOC inclusive of 76g/l and a specific gravity at 23°C of 0.84 (all values taken from datasheet). It does not contain any polymethylmethacrylate.

**DOWSIL^{™} Primer-C** is a solvent-based silane primer suitable for a variety of applications which has a coverage Rate, nonporous substrates of 800 ft² /gallon (16.33m² per litre), a specific gravity of 0.90, a Color Flash point -4°C and a VOC Content1 855 g/L based on South Coast Air Quality Management District of California. Maximum VOC. (all values taken from datasheet). It contains about 5wt. % of a methacrylate polymer in the composition.

**DOWSIL^{™} Construction Primer P** is a primer in the form of a proprietary alkoxy silane resin formulation in solvent for use on masonry surfaces. It is a clear liquid, having a specific Gravity (ASTM D 1298) of 0.95, a Flash Point (Closed Cup) of 8°C, Sealant Application Time at 25°C of between 0.5 and 8 hours and a VOC Content of 748 g/L Based on South Coast Air Quality Management District of California. Maximum VOC. (all values taken from datasheet). It contains about 20 wt. % of a polyacrylate in the composition.

**DOWSIL^{™} Construction Primer B** is a film forming primer for use on porous and metal substrates which is a clear liquid, has a Specific Gravity (ASTM D 1298) of 0.97, a Flash Point (Closed Cup) of 26°C Sealant Application Time at 25°C of between 0.5 and 8 hours, a VOC Content of 577 g/L Based on South Coast Air Quality Management District of California. Maximum VOC. (all values taken from datasheet). It contains about 40 wt. % of a methacrylate polymer in the composition. Two silicone resin materials were also used:
**DT silicone resin solution.** The DT silicone resin solution used was a clear/cloudy solution having about 70 wt. % of DT silicone resin in toluene (CTM 0208) with a viscosity of about 950 mPa. s at 25°C (CTM 0004). The DT silicone resin is made up of D units and T units

D = (R⁴R^{S}SiO_{2/2}), T = (R⁶SiO_{3/2})

With contains 0.65 mole fraction of D units (where R⁴ and R⁵ are methyl groups), 0.09 mole fraction of T units where R⁶ are methyl groups and 0.26 mole fraction of T units with R⁶ being phenyl) **MQ silicone resin solution.** The MQ silicone resin solution used was a clear/cloudy solution having about 70 wt. % of MQ silicone resin in xylene (CTM 0208) with a viscosity of from 9 to 13 mPa. s at 25°C (CTM 0004). The MQ resin is made up of M units and Q units

M = (R¹R²R³SiO_{1/2}) and Q = (SiO_{4/2})

It contains 0.42 mole fraction of M units in which R¹R² and R³ are methyl and 0.58 mole fraction are Q units.

Furthermore, a binder solution was also prepared:
**Polymethylmethacrylate (PMMA) solution.** The polymethylmethacrylate solution was a 30 wt. % solution of polymethylmethacrylate in 70 wt. % toluene. The PMMA used for this example and film were solid PMMA beads commercially available under the trademark PLEXIGLAS^{™} 6N, from Röhm GmbH of Darmstadt Germany. The solid PMMA beads were dissolved in toluene in the laboratory to make the binder solution. All of the commercial primers used are commercially available from Dow Silicones Corporation of Midland Michigan USA.

In a first series of examples and comparative examples, a granite substrate at a temperature of about 50°C was initially coated with a layer of a continuous resilient binder film forming composition before being top-coated with a one-part room temperature vulcanisable (RTV) silicone composition and any resulting bubbling which took place after the application of the one-part room temperature vulcanisable (RTV) silicone composition was assessed. In order to enhance the level of bubbling which might occur, the one-part room temperature vulcanisable (RTV) silicone composition was aged for a period of two weeks at 50°C prior to undergoing this assessment as it has been identified that the bubbling effect is most noticeable if the sealant composition applied has been stored for a period of time before use.

The granite substrates were heated to approximately 50°C and cleaned using isopropyl alcohol. Subsequently, the binder composition being tested was applied by brush and then left to dry through evaporation of the solvent to obtain a binder-coated granite substrate. The binder-coated granite substrate was then heated in the oven for 30 minutes to ensure same was at a temperature of at least 50°C at the time of application of the sealant composition. The binder-coated granite substrate was removed from the oven, had the sealant composition coated onto top of the binder coating and then was immediately returned to the oven to maintain the sealant at about 50°C for the cure process. After cure each sample was visually assessed first to see if any surface blistering on the sealant surface was evident, and then the sealant layer was cut from one side to check for bubbles on the interface between the sealant and substrate.

A variety of examples and comparative examples having been prepared using two alternative one-part room temperature vulcanisable (RTV) silicone compositions. Formulation 1 was based on trialkoxy silyl ethylene terminated polymer and formulation 2 using silanol terminated polymer.

**Table. 1: The one-part room temperature vulcanisable (RTV) silicone composition used for examples 1-11 and comparable examples 1-5 (formulation 1) and the one-part room temperature vulcanisable (RTV) silicone composition used for examples 12-14 and comparable example 6 (formulation 2) Material**

| | Formⁿ 1 wt.% | Formⁿ 2 wt.% |
|---|---|---|
| Polymer 1 | 45.44 | |
| Polymer 2 | | 32 |
| Polymer 3 | | 13.74 |
| Precipitated calcium carbonate (PCC) filler | 45.66 | 30 |
| Ground calcium carbonate (GCC) | | 20 |
| Vinylmethyldimethoxysilane | 3.65 | |
| Methyltrimethoxysilane (MTM) | | 3.5 |
| Tris(3-trimethoxysilyl propyl isocyanurate | 0.25 | |
| Catalyst | 0.82 | 0.7 |
| Bis(trimethoxysilylpropyl)amine | 0.12 | |
| 3-(2-aminoethyl)-aminopropyltrimethoxysilane | 0.08 | 0.06 |
| Pigment | 4.00 | |
| Total | 100.00 | |

| | | |
|---|---|---|
| **Polymer 1** in Table 1 was trialkoxy silyl ethylene terminated polydimethylsiloxane having a viscosity of about 60,000 at 25°C; **Polymer 2** in Table 1 was a dimethylsilanol terminated polydimethylsiloxane having a viscosity of about 50,000 at 25°C; **Polymer 3** in Table 1 was a trimethyl terminated polydimethylsiloxane having a viscosity of 100mPa.s at 25°C which is commercially available as DOWSIL^{™} 200 Fluid from Dow Silicones Corporation of Midland Michigan USA; **;Precipitated calcium carbonate (PCC) filler:** The PCC was an ultrafine precipitated calcium carbonate coated with fatty acids sold under the trade name Neolight^{™} SP-T from Takehara Kagaku Kogyo Co., Ltd; **Ground calcium carbonate** (GCC) filler, was type 203A commercially available from Qunxin Powder Technology C. Ltd of Yangzhou, Jiangsu, Province, China; and **Catalyst** : Catalyst was Tyzor^{™} PITA SM which is an 80:20 wt. % mixture of Diisopropoxybisethylacetoacetatotitanate and methyltrimethoxy silane and is commercially available from Dorf Ketal Speciality Catalysts LLC of Texas USA. | | |

The viscosity of polymers 1 and 2 were measured in accordance with corporate test method CTM 0050, which is publicly available, and which is based on ASTM D 1084-16 method B, using a Brookfield DV-III Ultra Rheometer equipped with a cone-and-plate geometry using spindle 52 at 5 rpm for 2min.

**Table 1: Bubbling Status of Comparative Example (Ref. and C. 1 - C. 2) and Inventive Example (Ex. 1 & 2) on granite substrates at 50°C using formulation 1 as the one-part room temperature vulcanisable (RTV) silicone composition**

| | Ref. 1 | C. 1 | C. 2 | Ex. 1 | Ex. 2 |
|---|---|---|---|---|---|
| Binder/film forming agent | / | OS-1200 | Primer C | Primer P | Primer B |
| Polyacrylate content in Binder | / | 0 | 5% | 20% | 40% |
| Binder Film Appearance | NA | poor | poor | Res^{t} | Res^{t} |
| Description for bubbling status | Many bubbles | Many bubbles | Many bubbles | very few bubbles | almost no bubble |
| Score for bubbling status | 5 | 5 | 5 | 1.5 | 1.2 |

| | | | | | |
|---|---|---|---|---|---|
| The scoring criteria for the bubbling status was as follows: 1 = No bubbling observed; 2 = very minimal bubbling, no impact on adhesion; 3 = some bubbling, may have negative impact on adhesion; 4 = obvious bubbling observed, negatively impact adhesion; and 5 = very significant bubbling observed, almost no adhesion (easily peeling off by hand). | | | | | |

In reference 1 in Table 2 it will be noticed that a high level of bubbling was observed. In Reference 1 the sealant composition of Table 1 was applied directly onto the granite surface. As expected, it was also found that the sealant composition applied directly onto the granite had poor adhesion to the granite and was easily peeled off after curing.

For comparatives C. 1 and C. 2, both had a primer applied, in C.1 it was DOWSIL^{™} 1200 OS Primer, which contained no binder and in C. 2 it was DOWSIL^{™} Primer-C which comprised about 5 wt. % of a polymethylmethacrylate. In these cases, given the lack of or low level of binder content, the primer coatings were very thin. Whilst the thickness of the coating was not measured, the thickness of standard primer (non-film forming) coatings applied onto substrates are typically no more than 12.5µm thick which is much thinner than the continuous resilient binder film layers as described herein normally over 30µm. It was observed that the coating was discontinuous on the porous substrate and as such was identified as poor in the table 2, especially as the final products were not continuous resilient binder films. For general primers, especially when some solvents with low boiling point were used in the formulation, whilst they may enhance adhesion between the substrate and the sealant, they are not substantial enough to block the moisture channels through capillary tubes in the substrates at elevated temperature.

Although not quantified it seemed that the presence of the continuous resilient binder film between the hot granite surface and the one-part room temperature vulcanisable (RTV) silicone composition resulted in better adhesion between the hot granite at about 50°C and the resulting silicone sealant, however there was no or minimal difference with respect to bubbling. This teaches that it is not the application per se of primers onto the substrate surface which prevents or minimises the bubbling. In contrast in Ex. 1 and Ex. 2 the primers used to coat the granite surface comprising 20 wt. % (DOWSIL^{™} Construction Primer P) and 40 wt. % of binder (DOWSIL^{™} Construction Primer B) prevented or minimised bubbling in the one-part room temperature vulcanisable (RTV) silicone composition when applied onto the primer layer.

A second series of examples were then produced, again using formulation 1 as the one-part room temperature vulcanisable (RTV) silicone composition, comparing three further reference examples Ref. 2 to 4 where the sealant composition identified in table 1 after aging for two weeks at 50°C was applied directly onto three alternative substrates, white marble, granite and limestone. These were compared directly to Ex. 3 to 5 in which primer B was applied onto the substrate surface and allowed to dry before the application of the one-part room temperature vulcanisable (RTV) silicone composition. As above in each case the layer of film forming material, having 40 wt. % polymethylmethacrylate binder present prevented or minimised bubbling. The results are depicted below in Table 3.

**Table 2: Bubbling Status of Ref. 2 to 4 and Examples 3 to 5) on granite at 50°C using formulation 1 as the one-part room temperature vulcanisable (RTV) silicone composition**

| | Ref. 2 | Ref. 3 | Ref. 4 | Ex. 3 | Ex. 4 | Ex. 5 |
|---|---|---|---|---|---|---|
| Binder/ film forming agent | / | / | / | Primer B | Primer B | Primer B |
| PMMA content in Binder | / | / | / | 40% | 40% | 40% |
| Binder Film Appearance | NA | NA | NA | Res^{t} | Res^{t} | Res^{t} |
| Substrate, | WM | G | L | WM | G | L |
| Description for bubbling status | Many bubbles | Many bubbles | Many bubbles | No bubble | Almost no bubble | No bubble |
| Score for bubbling status | 5 | 5 | 5 | 1 | 1.2 | 1 |

In Table 3 WM is white marble, G is granite and L is limestone. NA stands for not applicable and Res^{t} stands for resilient.

Table 3 showed the alkoxy sealant sample on different types of hot stone substrates. As shown, if no primer coating, when alkoxy sealant was cured onto the 3 stone substrates, all showed many bubbles, while with the use of Primer B as a solvent borne binder composition, the resulting continuous resilient binder film succeeded in preventing any bubbles being observed on both white marble and limestone and even on granite, almost no bubbling was evident.

As a consequence of the previous results a third group of examples were undertaken, using formulation 1 as the one-part room temperature vulcanisable (RTV) silicone composition, to compare three binder solutions with primer B. The binder solutions utilised did not contain any additives they were just binder and solvent. Hence, they did not include for example any adhesion promoters or standard primer ingredients. These examples followed the same process as described above and the results are depicted in Table 4 below.

**Table 3: Bubbling Status of Examples 6 to 8 and comparative 3 on a Granite substrate at 50°C using formulation 1 as the one-part room temperature vulcanisable (RTV) silicone composition**

| | Ex. 6 | Ex. 7 | C. 3 | Ex. 8 |
|---|---|---|---|---|
| Primer/ film forming agent type | Primer B | DT | MQ | PMMA |
| Binder Film Appearance | Res^{t} | Res^{t} | brittle | Res^{t} |
| Description for bubbling status | Almost no bubbles | Almost no bubbles | Some bubbles | Almost no bubble |
| Score for bubbling status | 1.2 | 1.2 | 3* | 1.2 |

DT is the DT silicone resin solution described above. MQ is the MQ silicone resin solution described above and PMMA is the PMMA solution described above.

It was found that the DT resin film (Ex. 7) resulting from the application of the DT resin solution on the granite substrate at 50°C gave a similar result to that of the previously assessed DOWSIL^{™} Construction Primer B. Likewise, a PMMA continuous resilient binder film resulting from application of a 30% PMMA solution (Ex. 8) the one-part room temperature vulcanisable (RTV) silicone composition was coated thereon. This showed that it was indeed the presence of the resilient intermediate layer which managed to prevent the bubbling effect. It was also noted that the MQ resin solution of C. 3 when applied onto the granite at 50°C did not provide an acceptable binder film. Once dried/cured the MQ resin coating on the substrate surface provided a brittle and/ or powdery coating on the granite substrate. Whilst the MQ resin coating can be seen to have reduced bubbling to an extent, the non-resilient, brittle powdery layer was considered not to be suitable for the process herein, particularly as the one-part room temperature vulcanisable (RTV) silicone composition did not adhere well to it and was easily removed.

A further series of tests were undertaken on granite substrates at 50°C using formulation 1 as the one-part room temperature vulcanisable (RTV) silicone composition. Ref. 3 is a repeat of Ref. 1 and 2 and gave analogous results, comparative C. 4 is a repeat of comparative C. 2 and Ex. 10 is a repeat of Ex. 7. Ex. 9 was prepared to show that introducing an additional amount of binder, in the form of the 30 wt. % PMMA solution previously described, into Primer C resulted in a reduction in bubbling. The binder composition used in Ex. 9 was made by mixing 5g of primer C with 10g of PMMA solution (30%). Ex. 11 involved the addition of methyltrimethoxysilane (MTM) into the DT silicone resin described above. It was made by adding 0.5g of methyltrimethoxysilane into 9.5g the DT resin described above. The results are depicted in Table 5.

**Table 5: Bubbling Status of Examples 9 to 11, Ref. 3 and comparative 4 on a 50°C Granite substrate using formulation 1 as the one-part room temperature vulcanisable (RTV) silicone composition**

| | Ref. 3 | C. 4 | Ex. 9 | Ex.10 | Ex. 11 |
|---|---|---|---|---|---|
| Primer/ film forming agent type | / | Primer C | PMMA + Primer C | DT resin | DT resin + MTM |
| Binder Film Appearance | NA | Poor | Res^{t} | Res^{t} | Res^{t} |
| Description for bubbling status | Many bubbles | Many bubbles | Some bubbles | Almost no bubbles | Few bubbles |
| Score for bubbling status | 5 | 5 | 3 | 1.5 | 2 |

The results from Table 5 show that in example 9 when primer C and PMMA mixture were intermixed and used as the binder composition much less bubbling was observed on the granite substrate at a temperature of 50 °C granite when compared to both Ref. 3 and C. 4. It can also be observed from Ex. 11 that the addition of the MTM which can be utilised to improve adhesion between the DT silicone resin and the substrate surface, if required, still showed a significant improvement in bubbling mitigation when compared to Ref. 3 and did not significantly increase the amount of bubbling when compared to example 10, thus indicating that if desired/required an adhesion promoting material can be included in the binder composition should there be any adhesion issues between the binder and substrate surface.

A still further set of experiments were undertaken using formulation 2 in Table as the one-part room temperature vulcanisable (RTV) silicone composition. The results are provided in Table 6.

**Table 6: Bubbling Status of Ref. 4 and examples 12 to 14 on a 50°C Granite substrate using formulation 2 as the one-part room temperature vulcanisable (RTV) silicone composition**

| | Ref. 4 | Ex. 12 | Ex. 13 | Ex.14 |
|---|---|---|---|---|
| Primer/ film forming agent type | / | Primer B | PMMA | DT resin |
| Binder Film Appearance | NA | Res^{t} | Res^{t} | Res^{t} |
| Description for bubbling status | Many bubbles | No bubbles | Almost no bubbles | No bubbles |
| Score for bubbling status | 5 | 1 | 1.5 | 1 |

Ref.4 showed that applying formulation 2 onto a granite substrate at 50°C resulted in the same issues as with Refs. 1, 2 and 3 i.e., significant bubbling issues. However, the application of the Primer B, PMMA and DT resin in Examples 12 to 14 respectively onto a granite substrate at 50°C prior to the application of the one-part room temperature vulcanisable (RTV) silicone composition comprising organopolysiloxane polymers having two hydroxyl groups resulted in effectively no observation of bubbling subsequent to the application of formulation 2.

## Claims

1. A method of applying a one-part room temperature vulcanisable (RTV) silicone composition comprising organopolysiloxane polymers having at least two groups per molecule selected from alkoxy groups, hydroxyl groups or a combination thereof and titanate-based or zirconate-based catalysts onto a hot porous substrate at a temperature of at least 40°C comprising the steps of
(i) Applying
a waterborne or solvent borne binder composition comprising at least 20 wt. % of said binder selected from (meth)acrylic resin, poly(meth)acrylic acid, polyvinyl acetate, polyvinylpyrrolidone, polyvinyl butyral, polyurethane and a silicone resin of the structure
M₍ₐ₎D_{(b)}T_{(c)}Q₍ₐ₎
Where 0<a<1, b≥0, c ≥ 0, d ≥ 0, c + d is >0, a + b + c + d= 1, and a + d ≠ 1 when a, b, c and d are mole fractions or a mixture of two or more thereof;
onto the surface of a hot porous substrate at a temperature of at least 40°C;
(ii) allowing the waterborne or solvent borne binder composition to dry and/or cure enabling the binder to coalesce and form a continuous resilient binder film on the hot porous substrate, and then
(iii) applying and curing a one-part room temperature vulcanisable (RTV) silicone composition comprising organopolysiloxane polymers having at least two groups per molecule selected from alkoxy groups, hydroxyl groups or a combination thereof and titanate-based or zirconate-based catalysts on the surface of the continuous resilient binder film.

2. A method in accordance with claim 1 wherein the hot porous substrate is selected from stone, marble, brick, concrete, cement and other cementitious substrates.

3. A method in accordance with claim 1 or 2 wherein the solvent is selected from naphtha, toluene, heptane, methylisobutyl ketone, butyl acetate, and xylene, other mineral spirits, tert butyl acetate, methyl acetate, ethyl acetate, n-butyl acetate, methyl formate, ethyl formate, and any combination thereof.

4. A method in accordance with any preceding claim wherein the solvent borne binder composition comprises a non-aqueous solvent and from 20 to 75 wt. % of said binder is in the composition.

5. A method in accordance with any preceding claim wherein the solvent borne binder composition is a primer or a modified primer containing from 20 to 75 wt. % of said binder is in the composition.

6. A method in accordance with any preceding claim wherein the binder is a (meth)acrylic resin or DT silicone resin.

7. A sealed hot porous substrate at a temperature of at least 40°C which is the product of the process of claims 1 to 6.

8. A sealed hot porous substrate at a temperature of at least 40°C coated with a cured layer of a one-part room temperature vulcanisable (RTV) silicone composition obtained or obtainable by
(i) Applying
a waterborne or solvent borne binder composition comprising at least 20 wt. % of said binder selected from (meth)acrylic resin, poly(meth)acrylic acid, polyvinyl acetate, polyvinylpyrrolidone, polyvinyl butyral, polyurethane and a silicone resin of the structure
M₍ₐ₎D_{(b)}T_{(c)}Q₍ₐ₎
Where 0<a<1, b≥0, c ≥ 0, d ≥ 0, c + d is >0, a + b + c + d= 1, and a + d ≠ 1 when a, b, c and d are mole fractions or a mixture of two or more thereof;
onto the surface of a hot porous substrate at a temperature of at least 40°C;
(ii) allowing the waterborne or solvent borne binder composition to dry and/or cure enabling the binder to coalesce and form a continuous resilient binder film on the hot porous substrate, and then
(iii) applying and curing a one-part room temperature vulcanisable (RTV) silicone composition comprising organopolysiloxane polymers having at least two groups per molecule selected from alkoxy groups, hydroxyl groups or a combination thereof and titanate-based or zirconate-based catalysts on the surface of the continuous resilient binder film.

9. A sealed hot porous substrate at a temperature of at least 40°C in accordance with claim 7 or 8 having a continuous resilient binder film which is at least 30µm thick.

10. A sealed hot porous substrate at a temperature of at least 40°C in accordance with any one of claims 7, 8 or 9 wherein the hot porous substrate is selected from stone, marble, brick, concrete, cement and other cementitious substrates.

11. Use of a waterborne or solvent borne binder composition comprising at least 20 wt. % of said binder selected from (meth)acrylic resin, poly(meth)acrylic acid, polyvinyl acetate, polyvinylpyrrolidone, polyvinyl butyral, polyurethane and a silicone resin of the structure
M₍ₐ₎D_{(b)}T_{(c)}Q₍ₐ₎
Where 0<a<1, b≥0, c ≥ 0, d ≥ 0, c + d is >0, a + b + c + d= 1, and a + d ≠ 1 when a, b, c and d are mole fractions or a mixture of two or more thereof in a method for applying a one-part room temperature vulcanisable (RTV) silicone composition comprising organopolysiloxane polymers having at least two groups per molecule selected from alkoxy groups, hydroxyl groups or a combination thereof and titanate-based or zirconate-based catalysts on to a hot porous substrate at a temperature of at least 40°C comprising the steps of
applying waterborne or solvent borne binder composition comprising at least 20 wt. % of said binder onto the surface of a hot porous substrate at a temperature of at least 40°C;
allowing the waterborne or solvent borne binder composition comprising at least 20 wt. % of said binder to dry and/or cure enabling the binder to coalesce and form a continuous resilient binder film on the hot porous substrate; and then
applying and curing a one-part room temperature vulcanisable (RTV) silicone composition comprising organopolysiloxane polymers having at least two groups per molecule selected from alkoxy groups, hydroxyl groups or a combination thereof and titanate-based or zirconate-based catalysts on the surface of the continuous resilient binder film.

12. Use in accordance with claim 11 wherein the continuous resilient binder film prevents or minimises the generation of bubbles in said one-part room temperature vulcanisable (RTV) silicone composition whilst curing on a hot porous substrate at a temperature of at least 40°C.

13. Use of the method in accordance with claims 1 to 6 for weather sealing a hot porous substrate at a temperature of at least 40°C whilst preventing or minimising the generation of bubbles in said one-part room temperature vulcanisable (RTV) silicone composition whilst curing at a temperature of at least 40°C.

14. Use in accordance with either claim 12 or 13 wherein the hot porous substrate is selected from stone, marble, brick, concrete, cement and other cementitious substrates.

15. A method for filling a space between a first substrate and a second substrate, at least one of which is a hot porous substrate at a temperature of at least 40°C, so as to create a seal therebetween, which seal has a cured layer of a one-part room temperature vulcanisable (RTV) silicone composition comprising:
(i) Applying
a waterborne or solvent borne binder composition comprising at least 20 wt. % of said binder selected from (meth)acrylic resin, poly(meth)acrylic acid, polyvinyl acetate, polyvinylpyrrolidone, polyvinyl butyral, polyurethane and a silicone resin of the structure
M₍ₐ₎D_{(b)}T_{(c)}Q₍ₐ₎
Where 0<a<1, b≥0, c ≥ 0, d ≥ 0, c + d is >0, a + b + c + d= 1, and a + d ≠ 1 when a, b, c and d are mole fractions or a mixture of two or more thereof;
at least partially onto the surface of the hot porous substrate at a temperature of at least 40°C;
(ii) allowing the waterborne or solvent borne binder composition to dry and/or cure enabling the binder to coalesce and form a continuous resilient binder film on at least the hot porous substrate; and then
(iii) applying and curing a one-part room temperature vulcanisable (RTV) silicone composition comprising organopolysiloxane polymers having at least two groups per molecule selected from alkoxy groups, hydroxyl groups or a combination thereof and titanate-based or zirconate-based catalysts on the surface of the continuous resilient binder film.

## Patentansprüche

1. Verfahren zum Aufbringen einer einteiligen, bei Raumtemperatur vulkanisierbaren (RTV) Silikonzusammensetzung, umfassend Organopolysiloxanpolymere, die mindestens zwei Gruppen pro Molekül aufweisen, die aus Alkoxygruppen, Hydroxylgruppen oder einer Kombination davon ausgewählt sind, und Katalysatoren auf Titanat- oder Zirkonatbasis, auf ein heißes poröses Substrat bei einer Temperatur von mindestens 40 °C, umfassend die Schritte
(i) Aufbringen
einer wasserhaltigen und lösungsmittelhaltigen Bindemittelzusammensetzung, umfassend mindestens zu 20 Gew.-% das Bindemittel, das aus (Meth)acrylharz, Poly(meth)acrylsäure, Polyvinylacetat, Polyvinylpyrrolidon, Polyvinylbutyral, Polyurethan und einem Silikonharz der Struktur ausgewählt ist
M₍ₐ₎D_{(b)}T_{(c)}Q_{(d)}
Wobei 0<a<1, b≥0, c ≥ 0, d ≥ 0, c + d > 0, a + b + c + d = 1 und a + d ≠ 1 ist, wenn a, b, c und d Molfraktionen oder eine Mischung aus zwei oder mehr davon sind;
auf die Oberfläche eines heißen porösen Substrats bei einer Temperatur von mindestens 40 °C;
(ii) Erlauben der wasserhaltigen oder lösungsmittelhaltigen Bindemittelzusammensetzung, zu trocknen und/oder auszuhärten, was dem Bindemittel ermöglicht, zu koaleszieren und einen kontinuierlichen, elastischen Bindemittelfilm auf dem heißen, porösen Substrat auszubilden, und dann
(iii) Aufbringen und Aushärten einer einteiligen, bei Raumtemperatur vulkanisierbaren (RTV) Silikonzusammensetzung, umfassend Organopolysiloxanpolymere, die mindestens zwei Gruppen pro Molekül aufweisen, die aus Alkoxygruppen, Hydroxylgruppen oder einer Kombination davon ausgewählt sind, und Katalysatoren auf Titanat- oder Zirkonatbasis umfasst, auf der Oberfläche des kontinuierlichen, elastischen Bindemittelfilms.

2. Verfahren nach Anspruch 1, wobei das heiße poröse Substrat aus Stein, Marmor, Ziegel, Beton, Zement und anderen zementartigen Substraten ausgewählt wird.

3. Verfahren nach Anspruch 1 oder 2, wobei das Lösungsmittel aus Naphtha, Toluol, Heptan, Methylisobutylketon, Butylacetat und Xylol, anderen Lösungsbenzinen, tert-Butylacetat, Methylacetat, Ethylacetat, n-Butylacetat, Methylformiat, Ethylformiat und einer beliebigen Kombination davon ausgewählt wird.

4. Verfahren nach einem der vorstehenden Ansprüche, wobei die lösungsmittelhaltige Bindemittelzusammensetzung ein nichtwässriges Lösungsmittel umfasst und von zu 20 bis 75 Gew.-% das Bindemittel in der Zusammensetzung enthalten sind.

5. Verfahren nach einem der vorstehenden Ansprüche, wobei die lösungsmittelhaltige Bindemittelzusammensetzung ein Primer oder ein modifizierter Primer ist, die von zu 20 bis 75 Gew.-% das Bindemittel in der Zusammensetzung enthält.

6. Verfahren nach einem der vorstehenden Ansprüche, wobei das Bindemittel ein (Meth)acrylharz oder DT-Silikonharz ist.

7. Versiegeltes, heißes, poröses Substrat bei einer Temperatur von mindestens 40 °C, das das Produkt des Prozesses nach den Ansprüchen 1 bis 6 ist.

8. Versiegeltes, heißes, poröses Substrat bei einer Temperatur von mindestens 40 °C, beschichtet mit einer ausgehärteten Schicht einer einteiligen, bei Raumtemperatur vulkanisierbaren (RTV) Silikonzusammensetzung, erhalten oder erhältlich durch
(i) Aufbringen
einer wasserhaltigen und lösungsmittelhaltigen Bindemittelzusammensetzung, umfassend mindestens zu 20 Gew.-% das Bindemittel, das aus (Meth)acrylharz, Poly(meth)acrylsäure, Polyvinylacetat, Polyvinylpyrrolidon, Polyvinylbutyral, Polyurethan und einem Silikonharz der Struktur ausgewählt ist
M₍ₐ₎D_{(b)}T_{(c)}Q_{(d)}
Wobei 0<a<1, b≥0, c ≥ 0, d ≥ 0, c + d > 0, a + b + c + d = 1 und a + d ≠ 1 ist, wenn a, b, c und d Molfraktionen oder eine Mischung aus zwei oder mehr davon sind;
auf die Oberfläche eines heißen porösen Substrats bei einer Temperatur von mindestens 40 °C;
(ii) Erlauben der wasserhaltigen oder lösungsmittelhaltigen Bindemittelzusammensetzung, zu trocknen und/oder auszuhärten, was dem Bindemittel ermöglicht, zu koaleszieren und einen kontinuierlichen, elastischen Bindemittelfilm auf dem heißen, porösen Substrat auszubilden, und dann
(iii) Aufbringen und Aushärten einer einteiligen, bei Raumtemperatur vulkanisierbaren (RTV) Silikonzusammensetzung, umfassend Organopolysiloxanpolymere, die mindestens zwei Gruppen pro Molekül aufweisen, die aus Alkoxygruppen, Hydroxylgruppen oder einer Kombination davon ausgewählt sind, und Katalysatoren auf Titanat- oder Zirkonatbasis, auf der Oberfläche des kontinuierlichen, elastischen Bindemittelfilms.

9. Versiegeltes, heißes, poröses Substrat bei einer Temperatur von mindestens 40 °C nach Anspruch 7 oder 8, das einen durchgehenden, elastischen Bindemittelfilm aufweist, der mindestens 30 µm dick ist.

10. Versiegeltes heißes poröses Substrat bei einer Temperatur von mindestens 40 °C nach einem der Ansprüche 7, 8 oder 9, wobei das heiße poröse Substrat aus Stein, Marmor, Ziegel, Beton, Zement und anderen zementartigen Substraten ausgewählt ist.

11. Verwendung einer wasserhaltigen oder Iösungsmittelhaltgen Bindemittelzusammensetzung, umfassend mindestens zu 20 Gew.-% das Bindemittel, das aus (Meth)acrylharz, Poly(meth)acrylsäure, Polyvinylacetat, Polyvinylpyrrolidon, Polyvinylbutyral, Polyurethan und einem Silikonharz der Struktur ausgewählt ist
M₍ₐ₎D_{(b)}T_{(c)}Q_{(d)}
Wobei 0<a<1, b≥0, c ≥ 0, d ≥ 0, c + d ≥ 0, a + b + c + d = 1 und a + d ≠ 1 ist, wenn a, b, c und d Molfraktionen oder eine Mischung aus zwei oder mehreren davon sind, in einem Verfahren zum Aufbringen einer einteiligen, bei Raumtemperatur vulkanisierbaren (RTV) Silikonzusammensetzung, umfassend Organopolysiloxanpolymere, die mindestens zwei Gruppen pro Molekül aufweisen, die aus Alkoxygruppen, Hydroxylgruppen oder einer Kombination davon ausgewählt sind, und Katalysatoren auf Titanat- oder Zirkonatbasis, auf ein heißes poröses Substrat bei einer Temperatur von mindestens 40 °C, umfassend die Schritte
Aufbringen einer wasserhaltigen- oder Iösungsmittelhaltgen Bindemittelzusammensetzung, umfassend mindestens zu 20 Gew.-% das Bindemittel, auf die Oberfläche eines heißen porösen Substrats bei einer Temperatur von mindestens 40 °C;
Erlauben der wasserhaltigen- oder Iösungsmittelhaltgen Bindemittelzusammensetzung, umfassend mindestens zu 20 Gew.-% das Bindemittel, zu trocknen und/oder auszuhärten, was dem Bindemittel ermöglicht, zu koaleszieren und einen kontinuierlichen, elastischen Bindemittelfilm auf dem heißen, porösen Substrat auszubilden; und dann
Aufbringen und Aushärten einer einteiligen, bei Raumtemperatur vulkanisierbaren (RTV) Silikonzusammensetzung, umfassend Organopolysiloxanpolymere, die mindestens zwei Gruppen pro Molekül aufweisen, die aus Alkoxygruppen, Hydroxylgruppen oder einer Kombination davon ausgewählt sind, und Katalysatoren auf Titanat- oder Zirkonatbasis, auf der Oberfläche des kontinuierlichen, elastischen Bindemittelfilms.

12. Verwendung nach Anspruch 11, wobei der kontinuierliche, elastische Bindemittelfilm die Generierung von Blasen in der einteiligen, bei Raumtemperatur vulkanisierbaren (RTV) Silikonzusammensetzung verhindert oder minimiert, während sie auf einem heißen, porösen Substrat bei einer Temperatur von mindestens 40 °C aushärtet.

13. Verwendung des Verfahrens nach Ansprüchen 1 bis 6 zum Wetterversiegeln eines heißen, porösen Substrats bei einer Temperatur von mindestens 40 °C, wobei die Generierung von Blasen in der einteiligen, bei Raumtemperatur vulkanisierbaren (RTV) Silikonzusammensetzung verhindert oder minimiert wird, während sie bei einer Temperatur von mindestens 40 °C aushärtet.

14. Verwendung nach Anspruch 12 oder 13, wobei das heiße poröse Substrat aus Stein, Marmor, Ziegel, Beton, Zement und anderen zementartigen Substraten ausgewählt ist.

15. Verfahren zum Füllen eines Raums zwischen einem ersten Substrat und einem zweiten Substrat, von denen mindestens eines ein heißes poröses Substrat bei einer Temperatur von mindestens 40 °C ist, um dazwischen eine Abdichtung zu erzeugen, wobei die Abdichtung eine ausgehärtete Schicht aus einer einteiligen, bei Raumtemperatur vulkanisierbaren (RTV) Silikonzusammensetzung aufweist, umfassend:
(i) Aufbringen
einer wasserhaltigen und lösungsmittelhaltigen Bindemittelzusammensetzung, umfassend mindestens zu 20 Gew.-% das Bindemittel, das aus (Meth)acrylharz, Poly(meth)acrylsäure, Polyvinylacetat, Polyvinylpyrrolidon, Polyvinylbutyral, Polyurethan und einem Silikonharz der Struktur ausgewählt ist
M₍ₐ₎D_{(b)}T_{(c)}Q_{(d)}
Wobei 0<a<1, b≥0, c ≥ 0, d ≥ 0, c + d > 0, a + b + c + d = 1 und a + d ≠ 1 ist, wenn a, b, c und d Molfraktionen oder eine Mischung aus zwei oder mehr davon sind;
mindestens teilweise auf die Oberfläche des heißen porösen Substrats bei einer Temperatur von mindestens 40 °C;
(ii) Erlauben der wasserhaltigen oder lösungsmittelhaltigen Bindemittelzusammensetzung zu trocknen und/oder auszuhärten, was dem Bindemittel ermöglicht, zu koaleszieren und einen kontinuierlichen, elastischen Bindemittelfilm auf mindestens dem heißen, porösen Substrat auszubilden; und dann
(iii) Aufbringen und Aushärten einer einteiligen, bei Raumtemperatur vulkanisierbaren (RTV) Silikonzusammensetzung, umfassend Organopolysiloxanpolymere, die mindestens zwei Gruppen pro Molekül aufweisen, die aus Alkoxygruppen, Hydroxylgruppen oder einer Kombination davon ausgewählt sind, und Katalysatoren auf Titanat- oder Zirkonatbasis umfasst, auf der Oberfläche des kontinuierlichen, elastischen Bindemittelfilms.

## Revendications

1. Procédé d'application d'une composition de silicone vulcanisable à température ambiante (RTV) en une partie, comprenant des polymères organopolysiloxane ayant au moins deux groupes par molécule choisis parmi des groupes alcoxy, des groupes hydroxyle ou une combinaison de ceux-ci et des catalyseurs à base de titanate ou de zirconate sur un substrat poreux chaud à une température d'au moins 40 °C, comprenant les étapes consistant à
(i) Appliquer
une composition de liant à base d'eau ou de solvant comprenant au moins 20 % en poids dudit liant choisi parmi une résine (méth)acrylique, un acide poly(méth)acrylique, un acétate de polyvinyle, une polyvinylpyrrolidone, un butyral de polyvinyle, un polyuréthane et une résine de silicone de structure
M₍ₐ₎D_{(b)}T_{(c)}Q_{(d)}
Où 0 < a < 1, b ≥ 0, c ≥ 0, d ≥ 0, c + d est > 0, a + b + c + d = 1, et a + d ≠ 1 lorsque a, b, c et d sont des fractions molaires ou un mélange de deux ou plus d'entre elles ;
sur la surface d'un substrat poreux chaud à une température d'au moins 40 °C ;
(ii) laisser sécher et/ou durcir la composition de liant à base d'eau ou de solvant, ce qui permet au liant de coalescer et de former un film de liant élastique continu sur le substrat poreux chaud, puis
(iii) appliquer et durcir une composition de silicone vulcanisable à température ambiante (RTV) en une partie, comprenant des polymères organopolysiloxane ayant au moins deux groupes par molécule choisis parmi des groupes alcoxy, des groupes hydroxyle ou une combinaison de ceux-ci et des catalyseurs à base de titanate ou de zirconate sur la surface du film de liant élastique continu.

2. Procédé selon la revendication 1, dans lequel le substrat poreux chaud est choisi parmi la pierre, le marbre, la brique, le béton, le ciment et d'autres substrats cimentaires.

3. Procédé selon la revendication 1 ou 2, dans lequel le solvant est choisi parmi le naphta, le toluène, l'heptane, la méthylisobutylcétone, l'acétate de butyle et le xylène, d'autres essences minérales, l'acétate de tert-butyle, l'acétate de méthyle, l'acétate d'éthyle, l'acétate de n-butyle, le formiate de méthyle, le formiate d'éthyle, et une combinaison quelconque de ceux-ci.

4. Procédé selon l'une quelconque revendication précédente, dans lequel la composition de liant à base de solvant comprend un solvant non aqueux et de 20 à 75 % en poids dudit liant est dans la composition.

5. Procédé selon l'une quelconque des revendications précédentes, dans lequel la composition de liant à base de solvant est un apprêt ou un apprêt modifié contenant de 20 à 75 % en poids dudit liant est dans la composition.

6. Procédé selon l'une quelconque revendication précédente, dans lequel le liant est une résine (méth)acrylique ou une résine de silicone DT.

7. Substrat poreux chaud scellé à une température d'au moins 40 °C, qui est le produit du procédé selon les revendications 1 à 6.

8. Substrat poreux chaud scellé à une température d'au moins 40 °C, recouvert d'une couche durcie d'une composition de silicone vulcanisable à température ambiante (RTV) en une partie, obtenue ou pouvant être obtenue
(i) En appliquant
une composition de liant à base d'eau ou de solvant comprenant au moins 20 % en poids dudit liant choisi parmi une résine (méth)acrylique, un acide poly(méth)acrylique, un acétate de polyvinyle, une polyvinylpyrrolidone, un butyral de polyvinyle, un polyuréthane et une résine de silicone de structure
M₍ₐ₎D_{(b)}T_{(c)}Q_{(d)}
Où 0 < a < 1, b ≥ 0, c ≥ 0, d ≥ 0, c + d est > 0, a + b + c + d = 1, et a + d ≠ 1 lorsque a, b, c et d sont des fractions molaires ou un mélange de deux ou plusieurs d'entre elles ;
sur la surface d'un substrat poreux chaud à une température d'au moins 40 °C ;
(ii) en laissant sécher et/ou durcir la composition de liant à base d'eau ou de solvant, ce qui permet au liant de coalescer et de former un film de liant élastique continu sur le substrat poreux chaud, puis
(iii) en appliquant et durcissant une composition de silicone vulcanisable à température ambiante (RTV) en une partie, comprenant des polymères organopolysiloxane ayant au moins deux groupes par molécule choisis parmi des groupes alcoxy, des groupes hydroxyle ou une combinaison de ceux-ci et des catalyseurs à base de titanate ou de zirconate sur la surface du film de liant élastique continu.

9. Substrat poreux chaud scellé à une température d'au moins 40 °C conformément à la revendication 7 ou 8, ayant un film de liant élastique continu d'une épaisseur d'au moins 30 µm.

10. Substrat poreux chaud scellé à une température d'au moins 40 °C conformément à l'une quelconque des revendications 7, 8 ou 9, dans lequel le substrat poreux chaud est choisi parmi la pierre, le marbre, la brique, le béton, le ciment et d'autres substrats cimentaires.

11. Utilisation d'une composition de liant à base d'eau ou de solvant comprenant au moins 20 % en poids dudit liant choisi parmi une résine (méth)acrylique, un acide poly(méth)acrylique, un acétate de polyvinyle, une polyvinylpyrrolidone, un butyral de polyvinyle, un polyuréthane et une résine de silicone de structure
M₍ₐ₎D_{(b)}T_{(c)}Q_{(d)}
Où 0 < a < 1, b ≥ 0, c ≥ 0, d ≥ 0, c + d est > 0, a + b + c + d = 1, et a + d ≠ 1 lorsque a, b, c et d sont des fractions molaires ou un mélange de deux ou plusieurs d'entre elles dans un procédé d'application d'une composition de silicone vulcanisable à température ambiante (RTV) en une partie, comprenant des polymères organopolysiloxane ayant au moins deux groupes par molécule choisis parmi des groupes alcoxy, des groupes hydroxyle ou une combinaison de ceux-ci et des catalyseurs à base de titanate ou de zirconate sur un substrat poreux chaud à une température d'au moins 40 °C, comprenant les étapes consistant à
appliquer une composition de liant à base d'eau ou de solvant comprenant au moins 20 % en poids dudit liant sur la surface d'un substrat poreux chaud à une température d'au moins 40 °C ;
laisser sécher et/ou durcir la composition de liant à base d'eau ou de solvant comprenant au moins 20 % en poids dudit liant, ce qui permet au liant de coalescer et de former un film de liant élastique continu sur le substrat poreux chaud ; puis
appliquer et durcir une composition de silicone vulcanisable à température ambiante (RTV) en une seule partie, comprenant des polymères organopolysiloxane ayant au moins deux groupes par molécule choisis parmi des groupes alcoxy, des groupes hydroxyle ou une combinaison de ceux-ci et des catalyseurs à base de titanate ou de zirconate sur la surface du film de liant élastique continu.

12. Utilisation selon la revendication 11, dans laquelle le film liant élastique continu empêche ou minimise la formation de bulles dans ladite composition de silicone vulcanisable à température ambiante (RTV) en une partie pendant le durcissement sur un substrat poreux chaud à une température d'au moins 40 °C.

13. Utilisation du procédé selon les revendications 1 à 6 pour étanchéifier aux intempéries un substrat poreux chaud à une température d'au moins 40 °C tout en empêchant ou en minimisant la formation de bulles dans ladite composition de silicone vulcanisable à température ambiante (RTV) en une partie pendant le durcissement à une température d'au moins 40 °C.

14. Utilisation selon l'une quelconque des revendications 12 ou 13, dans laquelle le substrat poreux chaud est choisi parmi la pierre, le marbre, la brique, le béton, le ciment et d'autres substrats cimentaires.

15. Procédé de remplissage d'un espace entre un premier substrat et un second substrat, dont au moins l'un est un substrat poreux chaud à une température d'au moins 40 °C, de manière à créer un joint d'étanchéité entre eux, lequel joint comporte une couche durcie d'une composition de silicone vulcanisable à température ambiante (RTV) en une partie, comprenant :
(i) L'application
d'une composition de liant à base d'eau ou de solvant comprenant au moins 20 % en poids dudit liant choisi parmi une résine (méth)acrylique, un acide poly(méth)acrylique, un acétate de polyvinyle, une polyvinylpyrrolidone, un butyral de polyvinyle, un polyuréthane et une résine de silicone de structure
M₍ₐ₎D_{(b)}T_{(c)}Q_{(d)}
Où 0 < a < 1, b ≥ 0, c ≥ 0, d ≥ 0, c + d est > 0, a + b + c + d = 1, et a + d ≠ 1 lorsque a, b, c et d sont des fractions molaires ou un mélange de deux ou plusieurs d'entre elles ;
au moins partiellement sur la surface du substrat poreux chaud à une température d'au moins 40 °C ;
(ii) le fait de laisser sécher et/ou durcir la composition de liant à base d'eau ou de solvant, ce qui permet au liant de coalescer et de former un film de liant élastique continu sur au moins le substrat poreux chaud ; puis
(iii) l'application et le durcissement d'une composition de silicone vulcanisable à température ambiante (RTV) en une partie, comprenant des polymères organopolysiloxane ayant au moins deux groupes par molécule choisis parmi des groupes alcoxy, des groupes hydroxyle ou une combinaison de ceux-ci et des catalyseurs à base de titanate ou de zirconate sur la surface du film de liant élastique continu.
